(19) 

Europäisches
Patentamt

European
Patent Office

Office européen
des brevets

(11) **EP 4 718 901 A1**

(12) **EUROPEAN PATENT APPLICATION**
published in accordance with Art. 153(4) EPC

(43) Date of publication:
**01.04.2026 Bulletin 2026/14**

(21) Application number: **23937907.6**

(22) Date of filing: **23.05.2023**

(51) International Patent Classification (IPC):
*H04W 12/069* (2021.01)

(52) Cooperative Patent Classification (CPC):
**H04W 12/069**

(86) International application number:
**PCT/CN2023/095769**

(87) International publication number:
**WO 2024/239231 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **XIONG, Lihui
Dongguan, Guangdong 523860 (CN)**
• **GAN, Lu
Dongguan, Guangdong 523860 (CN)**

(74) Representative: **RGTH
Patentanwälte PartGmbB
Neuer Wall 10
20354 Hamburg (DE)**

(54) **METHOD AND APPARATUS FOR AUTHENTICATION**

(57)    The present application provides a method and
an apparatus for authentication. The method comprises:
a first device receiving a first authentication request from
an agent node, wherein the first authentication request
comprises a first message authentication code, and the
first message authentication code is generated by an
authentication network element; the first device generat-
ing a second message authentication code on the basis
of a first key generation algorithm and a first parameter;
the first device authenticating the authentication network
element on the basis of the first message authentication
code and the second message authentication code; the
first device generating a response parameter in the con-
dition that the authentication network element is successfully authenticated; and the first device sending a first
authentication response to the agent node, wherein the
first authentication response comprises the response
parameter, and the response parameter is configured
for authenticating the first device.

FIG. 10

**Description**

**TECHNICAL FIELD**

This application relates to the field of communications technologies, and more specifically, to an authentication method and an apparatus.

**BACKGROUND**

To improve communication security, before communicating with a network side, a terminal device may first perform authentication and key agreement with the network side. After a first device (for example, a zero-power terminal) is introduced, due to a relatively low computing capability of the first device, there is currently no clear specification on how the first device should perform an authentication and key agreement procedure with the network side.

**SUMMARY**

This application provides an authentication method and an apparatus. The following describes in detail the aspects related to this application.

According to a first aspect, there is provided an authentication method. The authentication method includes: receiving, by a first device, a first authentication request from a proxy node, where the first authentication request includes a first message authentication code, and the first message authentication code is generated by an authentication network element; generating, by the first device, a second message authentication code based on a first key generation algorithm and a first parameter; authenticating, by the first device, the authentication network element based on the first message authentication code and the second message authentication code; generating, by the first device, a response parameter in a case in which the authentication network element is successfully authenticated; and transmitting, by the first device, a first authentication response to the proxy node, where the first authentication response includes the response parameter, and the response parameter is used to authenticate the first device.

According to a second aspect, there is provided an authentication method. The authentication method includes: transmitting, by a proxy node, a first authentication request to a first device, where the first authentication request includes a first message authentication code, the first message authentication code is generated by an authentication network element, the first message authentication code and a second message authentication code are used to authenticate the authentication network element, the second message authentication code is generated by the first device, and the first message authentication code and the second message authentication code are generated based on a first key generation algorithm and a first parameter; and receiving, by the proxy node, a first authentication response from the first device, where the first authentication response includes a response parameter, the response parameter is used to authenticate the first device, and the response parameter is generated in a case in which the authentication network element is successfully authenticated.

According to a third aspect, there is provided an authentication method. The authentication method includes: generating, by an authentication network element, a first message authentication code and an expected response, where the expected response is used to authenticate a first device, and the first message authentication code is generated based on a first key generation algorithm and a first parameter; and transmitting, by the authentication network element, a first authentication request to a proxy node, where the first authentication request includes the first message authentication code, the first message authentication code and a second message authentication code are used to authenticate the authentication network element, and the second message authentication code is generated by the first device.

According to a fourth aspect, there is provided an authentication method. The authentication method includes: transmitting, by an access network device, a first authentication request to a first device, where the first authentication request includes a first message authentication code, the first message authentication code is generated by an authentication network element, the first message authentication code and a second message authentication code are used to authenticate the authentication network element, the second message authentication code is generated by the first device, and the first message authentication code and the second message authentication code are generated based on a first key generation algorithm and a first parameter; and receiving, by the access network device, a first authentication response from the first device, where the first authentication response includes a response parameter, the response parameter is used to authenticate the first device, and the response parameter is generated in a case in which the authentication network element is successfully authenticated.

According to a fifth aspect, there is provided a device, where the device is a first device, and the first device includes: a receiving unit, configured to receive a first authentication request from a proxy node, where the first authentication request includes a first message authentication code, and the first message authentication code is generated by an authentication network element; a generation unit, configured to generate a second message authentication code based on a first key generation algorithm and a first parameter; an authentication unit, configured to authenticate the authentication network element based on the first message authentication code and the second message authentication code; the generation unit, further configured to generate, by the first device, a response parameter in a case in which the authentication network element is successfully authenticated; and a transmitting unit, configured to transmit a first authentication response to the proxy node, where the first authentication response includes the response parameter, and the response parameter is used to authenticate the first device.

According to a sixth aspect, there is provided a proxy node. The proxy node includes: a transmitting unit, configured to transmit a first authentication request to a first device, where the first authentication request includes a first message authentication code, the first message authentication code is generated by an authentication network element, the first message authentication code and a second message authentication code are used to authenticate the authentication network element, the second message authentication code is generated by the first device, and the first message authentication code and the second message authentication code are generated based on a first key generation algorithm and a first parameter; and a receiving unit, configured to receive a first authentication response from the first device, where the first authentication response includes a response parameter, the response parameter is used to authenticate the first device, and the response parameter is generated in a case in which the authentication network element is successfully authenticated.

According to a seventh aspect, there is provided an authentication network element. The authentication network element includes: a generation unit, configured to generate a first message authentication code and an expected response, where the expected response is used to authenticate a first device, and the first message authentication code is generated based on a first key generation algorithm and a first parameter; and a transmitting unit, configured to transmit a first authentication request to a proxy node, where the first authentication request includes the first message authentication code, the first message authentication code and a second message authentication code are used to authenticate the authentication network element, and the second message authentication code is generated by the first device.

According to an eighth aspect, there is provided an access network device. The access network device includes: a transmitting unit, configured to transmit a first authentication request to a first device, where the first authentication request includes a first message authentication code, the first message authentication code is generated by an authentication network element, the first message authentication code and a second message authentication code are used to authenticate the authentication network element, the second message authentication code is generated by the first device, and the first message authentication code and the second message authentication code are generated based on a first key generation algorithm and a first parameter; and a receiving unit, configured to receive a first authentication response from the first device, where the first authentication response includes a response parameter, the response parameter is used to authenticate the first device, and the response parameter is generated in a case in which the authentication network element is successfully authenticated.

According to a ninth aspect, there is provided a device. The device includes a memory and a processor, where the memory is configured to store a program, and the processor is configured to invoke the program in the memory to execute the method according to the first aspect.

According to a tenth aspect, there is provided a proxy node. The proxy node includes a memory and a processor, where the memory is configured to store a program, and the processor is configured to invoke the program in the memory, to execute the method according to the second aspect.

According to an eleventh aspect, there is provided an authentication network element. The authentication network element includes a memory and a processor, where the memory is configured to store a program, and the processor is configured to invoke the program in the memory to execute the method according to the third aspect.

According to a twelfth aspect, there is provided an access network device. The access network device includes a memory and a processor, where the memory is configured to store a program, and the processor is configured to invoke the program in the memory, to execute the method according to the fourth aspect.

According to a thirteenth aspect, there is provided an apparatus. The apparatus includes a processor configured to invoke a program from a memory to execute a method according to any one of the first aspect to the fourth aspect.

According to a fourteenth aspect, there is provided a chip. The chip includes a processor, configured to invoke a program from a memory to cause a device installed with the chip to execute a method according to any one of the first aspect to the fourth aspect.

According to a fifteenth aspect, there is provided a computer-readable storage medium, where the computer-readable storage medium stores a program that causes a computer to execute a method according to any one of the first aspect to the fourth aspect.

According to a sixteenth aspect, there is provided a computer program product. The computer program product includes a program, where the program causes a computer to execute a method according to any one of the first aspect to the fourth aspect.

According to a seventeenth aspect, there is provided a computer program, where the computer program causes a computer to execute a method according to any one of the first aspect to the fourth aspect.

A first device receives a first authentication request from a proxy node, where the first authentication request includes a first message authentication code, and the first message authentication code is generated by an authentication network element; the first device generates a second message authentication code based on a first key generation algorithm and a first parameter; the first device authenticates the authentication network element based on the first message authentication code and the second message authentication code; the first device generates a response parameter in a case in which the authentication network element is successfully authenticated; and the first device transmits a first authentication response to the proxy node, where the first authentication response includes the response parameter, and the response parameter is used to authenticate the first device.

In this application, a message authentication code (such as the second message authentication code) is generated based on the first key generation algorithm and the first parameter, so as to authenticate the authentication network element, thereby providing a clear solution for authentication between the first device and the network side.

## BRIEF DESCRIPTION OF DRAWINGS

FIG. 1 shows a wireless communications system 100 to which embodiments of this application are applied.

FIG. 2 is a schematic flowchart of initial authentication.

FIG. 3 is a schematic flowchart of generation of an AKMA key.

FIG. 4 is a schematic flowchart of generation of an application key.

FIG. 5 is a schematic diagram of derivation processes of various keys according to an embodiment of this application.

FIG. 6 is a schematic diagram of manners of generating various parameters according to an embodiment of this application.

FIG. 7 is a schematic diagram of a hybrid communications system according to an embodiment of this application.

FIG. 8 shows a communications system based on a 3GPP security credential according to an embodiment of this application.

FIG. 9 shows a communications system based on a non-3GPP security credential according to an embodiment of this application.

FIG. 10 is a schematic flowchart of an authentication method according to an embodiment of this application.

FIG. 11 is a schematic flowchart of an authentication method based on a proxy node and a 3GPP security credential according to an embodiment of this application.

FIG. 12 is a schematic flowchart of generation of an AKMA key based on FIG. 11.

FIG. 13 is a schematic flowchart of generation of an application key based on FIG. 12.

FIG. 14 is a schematic flowchart of another authentication method according to an embodiment of this application.

FIG. 15 is a schematic flowchart of an authentication method based on a 3GPP security credential according to an embodiment of this application.

FIG. 16 is a schematic flowchart of generation of an application key based on FIG. 15.

FIG. 17 is a schematic flowchart of another authentication method according to an embodiment of this application.

FIG. 18 is a schematic flowchart of an authentication method based on a proxy node and a non-3GPP security credential according to an embodiment of this application.

FIG. 19 is a schematic flowchart of another authentication method according to an embodiment of this application.

FIG. 20 is a schematic flowchart of an authentication method based on a non-3GPP security credential according to an embodiment of this application.

FIG. 21 is a schematic block diagram of a first device according to an embodiment of this application.

FIG. 22 is a schematic block diagram of a proxy node according to an embodiment of this application.

FIG. 23 is a schematic block diagram of an authentication network element according to an embodiment of this application.

FIG. 24 is a schematic block diagram of an access network device according to an embodiment of this application.

FIG. 25 is a schematic structural diagram of a communications apparatus according to an embodiment of this application.

## DESCRIPTION OF EMBODIMENTS

Technical solutions in this application are described below with reference to the accompanying drawings.

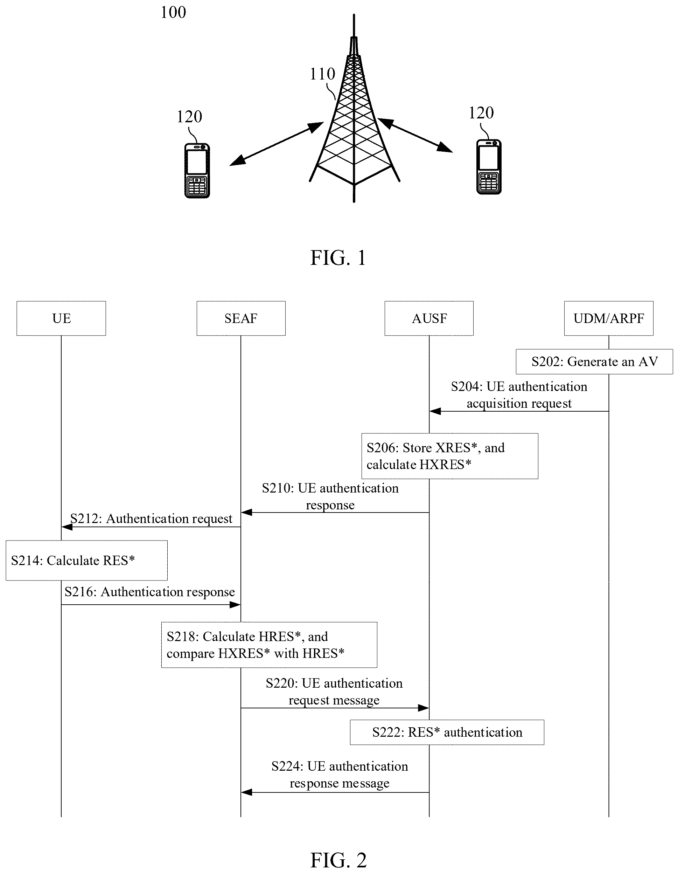

FIG. 1 shows a wireless communications system 100 to which embodiments of this application are applied. The wireless communications system 100 may include a network device 110 and terminal devices 120. The network device 110 may be a device that communicates with the terminal device 120. The network device 110 may provide communication coverage for a specific geographic area, and may communicate with a terminal device 120 within the coverage area.

FIG. 1 exemplarily shows one network device and two terminal devices. Optionally, the wireless communications system 100 may include a plurality of network devices, and another quantity of terminal devices may be included in coverage of each network device. This is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or a new radio (new radio, NR) system, a long-term evolution (long term evolution, LTE) system, an LTE frequency division duplex (frequency division duplex, FDD) system, and an LTE time division duplex (time division duplex, TDD) system. The technical solutions provided in this application may further be applied to a future communications system, such as a 6th generation mobile communications system or a satellite communications system.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without relaying a communication signal through a base station.

The network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover devices having the following various names, or may be interchanged with the devices having following names, such as a NodeB (NodeB), an evolved NodeB (evolved NodeB, eNB), a next generation NodeB (next generation NodeB, gNB), a relay station, a transmitting and receiving point (transmitting and receiving point, TRP), a transmitting point (transmitting point, TP), a master eNodeB MeNB, a secondary eNodeB SeNB, a multi-standard radio (MSR) node, a home base station, a network controller, an access node, a radio node, an access point (access piont, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

The base station may be stationary or mobile. For example, a helicopter or an unmanned aerial vehicle may be configured to function as a mobile base station, and one or more cells may move depending on a location of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of the communications device in this application may alternatively be implemented by software functions running on hardware, or by virtualization functions instantiated on a platform (for example, a cloud platform).

**Architecture of Authentication and Key Management for Applications (authentication and key management for applications, AKMA)**

A UE and an application function (application function, AF) may communicate with each other using an application key ($K_{AF}$), where $K_{AF}$ may be used to secure the communication. A process of generating $K_{AF}$ involves a plurality of functional network elements, such as an access and mobility management function (access and mobility management function, AMF), an authentication server function (authentication server function, AUSF), a unified data management (unified data management, UDM), an AKMA anchor function (AKMA anchor function, AAnF), and an AF. The following describes these functional network elements.

The AMF is mainly configured for mobility management, access management, and the like, and may be configured to implement functions other than session management in functions of a mobility management entity (mobility management entity, MME), such as lawful interception and access authorization or authentication.

The AUSF is configured for authentication services, key generation, and mutual authentication of a UE, and supports a unified authentication framework. In embodiments of this application, the AUSF is mainly configured for mutual authentication between a UE and a network, and for generating a security key for use in subsequent procedures.

The UDM may be configured for UE identity processing, access authentication, registration, mobility management, and the like.

The AF is configured for data routing at an application layer, access network exposure functions, interaction with a policy framework for policy control, and the like.

The AAnF is configured to generate an AKMA anchor key ($K_{AKMA}$) and an application key ($K_{AF}$). The AAnF may generate $K_{AF}$ in a same manner as the UE. After generating $K_{AF}$, the AAnF may transmit the generated $K_{AF}$ to the AF. Therefore, the AF and the UE may communicate with each other based on the same key $K_{AF}$, so as to ensure communication security.

To generate $K_{AF}$, the UE may first perform initial authentication with a network side, and obtain a key (for example, $K_{AUSF}$) after the initial authentication is completed, where the key may be used to generate $K_{AF}$.

The initial authentication process is described below with reference to FIG. 2.

Referring to FIG. 2, in step S202, a UDM/authentication credential repository and processing function (authentication credential repository and processing function, ARPF) generates an authentication vector (authentication vector, AV).

The UDM/ARPF may create a 5G HE AV for each authentication acquisition request message (such as a Nudm Authenticate Get Request). The UDM/ARPF may first generate an authentication vector with "separation bit" of AMF set to 1, and then calculate $K_{AUSF}$ and XRES*. Finally, the UDM/ARPF may create a 5G HE AV containing RAND, AUTN, XRES*, and $K_{AUSF}$.

In step S204, the UDM transmits a UE authentication acquisition response message (such as a Nudm_ueauthentication_Get Response) to an AUSF. The UE authentication acquisition response message includes a 5G HE AV and indication information, where the indication information is used to indicate that the 5G HE AV is used for 5G authentication and key agreement (authentication and key agreement, AKA). If a subscription concealed identifier (subscription concealed identifier, SUCI) is included in the authentication acquisition request message, a subscription permanent identifier (subscription permanent identifier, SUPI) may be included in the UE authentication acquisition response message.

In step S206, after receiving the UE authentication acquisition response message, the AUSF may temporarily store XRES* and the received SUCI or SUPI. The AUSF may further store $K_{AUSF}$.

The AUSF may generate a 5G AV based on the 5G HE AV received from the UDM/ARPF. In addition, the AUSF may calculate HXRES* based on XRES*, calculate $K_{SEAF}$ based on $K_{AUSF}$, and then replace XRES* and $K_{AUSF}$ in the 5G HE AV with HXRES* and $K_{SEAF}$, respectively.

In step S210, the AUSF transmits a UE authentication response (such as a Nausf_UEAuthentication_Authenticate Response) to a security anchor function (security anchor function, SEAF). The UE authentication response includes a 5G SE AV, and the 5G SE AV may include the RAND, the AUTN, and the HXRES*, but does not include the $K_{SEAF}$.

In step S212, the SEAF transmits an authentication request to the UE. The authentication request may be transmitted by using a non-access stratum (non-access stratum, NAS) message (such as Auth-Reg). The authentication request may include RANT and an authentication token (authtoken, AUTN). The message may further include ngKSI, and the ngKSI may be used by the UE and the AMF to identify $K_{AMF}$ and part of a native security context. The UE may include a mobile equipment (mobile equipment, ME) and a universal subscriber identity module (universal subscriber identity module, USIM). After the UE receives the RANT and the AUTN, the ME may forward the RANT and the AUTN to the USIM.

In step S214, after receiving the RANT and the AUTN, the USIM may check whether the AUTN is accepted, thereby verifying whether the authentication vector is the latest, to resist replay attacks. If the verification succeeds, the USIM may calculate a response RES, and return the RES, an encryption key (encrypt key, CK), and an integrity key (integrity key, IK) to the ME. The USIM may further calculate Kc (that is, GPRS Kc), and transmit the GPRS Kc to the ME. If the GPRS Kc is calculated based on the CK and the IK using a conversion function c3 as described in the third generation partnership project (the third generation partnership project, 3GPP) TS 33.102, the ME may ignore the GPRS Kc, and the GPRS Kc should not be stored on the USIM or the ME.

The ME may calculate RES* based on RES and calculate $K_{AUSF}$ based on CK‖IK. In addition, the ME may calculate $K_{SEAF}$ based on $K_{AUSF}$. If the ME accesses 5G, the ME may further check, during authentication, whether the "separation bit" in the AMF field of the AUTN is set to 1, where the "separation bit" is bit 0 of the AMF field of the AUTN. It should be noted that the "separation bit" in the AMF field of the AUTN is not used anymore for specific purposes of an operator.

In step S216, the UE transmits an authentication response to the SEAF, where the authentication response may include RES*. The authentication response may be transmitted by using a NAS message.

In step S218, the SEAF calculates HRES* based on RES*. The SEAF may compare HRES* with HXRES* to determine whether the two values match. If the two values match, the SEAF considers, from the perspective of a serving network, that the authentication is successful. If the two values do not match, the SEAF may proceed as described in 6.1.3.2.1 of the protocol. If the UE is not reachable, and the SEAF never receives RES*, the SEAF may consider that the authentication fails, and indicate, to the AUSF, that the authentication fails.

In step S220, the SEAF transmits a UE authentication request (such as a Nausf_UE Authentication _Authenticate Request) message to the AUSF, where the UE authentication request message may include a SUCI or SUPI.

In step S222, the AUSF receives the UE authentication request message, where the UE authentication request message may include RES*. The AUSF may verify whether the AV has expired. If the AV has expired, the AUSF may consider, from the perspective of a home domain network, that the authentication fails. The AUSF may determine whether the authentication is successful by comparing the received RES* with the stored XRES*. If RES* matches with XRES*, the AUSF considers, from the perspective of the home domain network, that the authentication is successful. If RES* does not matches with XRES*, the AUSF considers, from the perspective of the home domain network, that the authentication fails.

In step S224, the AUSF indicates, to the SEAF by using a UE authentication response (such as a Nausf_UE Authentication_Authenticate Response) message, whether the authentication is successful. If the authentication is successful, the AUSF may transmit $K_{SEAF}$ to the SEAF by using the UE authentication response message. If the authentication is successful, and the AUSF receives the SUCI from the SEAF when the authentication is started, the UE authentication response message may further include the SUPI.

If the authentication is successful, the SEAF may use the key $K_{SEAF}$ received in the UE authentication response message as the anchor key. In addition, the SEAF may calculate $K_{AMF}$ based on $K_{SEAF}$, an ABBA parameter, and the SUPI. The SEAF may provide $K_{SEAF}$ and ngKSI to the AMF.

If the SUCI is used for authentication, the SEAF may provide ngKSI and $K_{AMF}$ to the AMF only after receiving the UE authentication response message that includes the SUPI. Before the SUPI is obtained, the serving network provides no communication service to the UE.

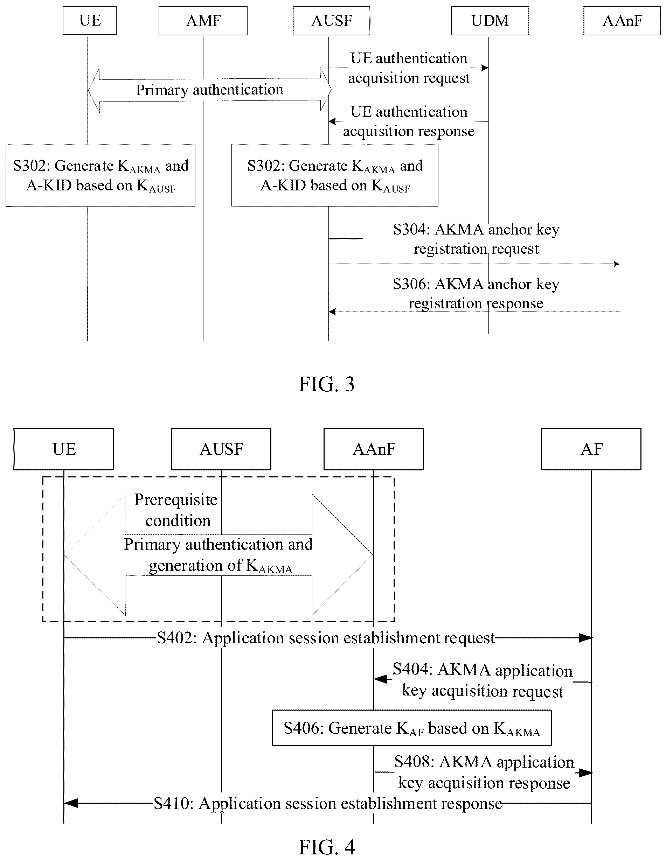

After the initial authentication is completed, the AUSF and the UE obtain $K_{AUSF}$, and $K_{AUSF}$ may be used to generate $K_{AF}$. An agreement procedure of $K_{AF}$ may be triggered by the UE by transmitting an AKMA key identifier (AKMA key identifier, A-KID) to the AF. With reference to FIG. 3 and FIG. 4, the following describes a process of generating $K_{AF}$.

In step S302, after initial authentication is completed, the UE and the AUSF may generate $K_{AKMA}$ and an A-KID based on $K_{AUSF}$.

In step S304, the AUSF may transmit an AKMA anchor key registration request (such as a Naanf_AKMA_AnchorKey_Register Request) to the AAnF, where the AKMA anchor key registration request may include the SUPI, the A-KID, and $K_{AKMA}$.

In step S306, the AAnF may return an AKMA anchor key registration response (such as a Naanf_AKMA_AnchorKey_Register Response) to the AUSF.

Referring to FIG. 4, in step S402, after initial authentication is completed and $K_{AKMA}$ is generated, the UE may transmit an application session establishment request to the AF. The application session establishment request may include the A-KID.

In step S404, the AF transmits an AKMA application key acquisition request (such as a Naanf_AKMA_ApplicationKey_Get Request) to the AAnF. The AKMA application key acquisition request may include the A-KID and an identifier of the AF (AF identifier, AF-ID). The A-KID is the A-KID in the application session establishment request. In some embodiments, the AKMA application key acquisition request may further include a request for an identity of the UE (UE identity, UE-ID). The UE-ID includes one or more of the SUPI, the SUCI, or a generic public subscription identifier (generic public subscription identifier, GPSI).

In step S406, after receiving the AKMA application key acquisition request, the AAnF may determine corresponding $K_{AKMA}$ based on the A-KID, and generate a key $K_{AF}$ based on $K_{AKMA}$.

In step S408, the AAnF transmits an AKMA application key acquisition response to the AF. The application key acquisition response may include $K_{AF}$, an expiration time of validity of $K_{AF}$ ($K_{AF}$ expTime), the UE-ID, and the like.

In step S410, the AF transmits an application session establishment response to the UE.

It may be understood that the UE may generate $K_{AF}$ in a same manner as the AAnF, that is, a manner of generating $K_{AF}$ by the UE based on $K_{AKMA}$ is the same as a manner of generating $K_{AF}$ by the AAnF based on $K_{AKMA}$. In this way, the UE and the AF may communicate with each other by using the same key $K_{AF}$.

A manner of generating the keys (such as $K_{AKMA}$, the A-KID, and $K_{AF}$) described above is not specifically limited in embodiments of this application. For example, the keys described above may be generated by using a key derivation function (key derivation function, KDF). The KDF may be any key derivation function that can satisfy computing security. For example, the KDF may be HMAC-SHA-256 or HMAC-SM3. A manner of generating the keys is described below by using the KDF as an example.

For example, the following parameters may be used as an input S to the KDF when deriving $K_{AKMA}$ from $K_{AUSF}$:

- FC=0xXX(for example, 0x80);
- P0="AKMA";
- L0=Length of AKMA (for example, 0x00 0x04);
- P1=SUPI;
- L1=Length of SUPI;

An input key (key) is $K_{AUSF}$.

For another example, the following parameters may be used as an input S to the KDF for deriving $K_{AF}$ from $K_{AKMA}$, where this manner is referred to as Manner 1 hereinafter:

- FC=0xXX(for example, 0x82);
- P0=AF_ID;
- L0=Length of AF_ID;

An input key is $K_{AKMA}$.

AF_ID = FQDN of the AF‖Ua*Security protocol identifier.

For another example, the A-KID may include two parts: a routing indicator (routing indicator, RID) and an AKMA temporary UE identifier (AKMA temporary ue identifier, A-TID). The RID is included in the SUPI, and the A-TID may be generated based on $K_{AUSF}$. The following parameters may be used as an input S to the KDF when deriving the A-TID from $K_{AUSF}$:

- FC = 0xXX(for example, 0x81);
- P0 ="A-TID";
- L0 = Length (such as 0x00 0x05) of "A-TID";
- P1 = SUPI;
- L1 = Length of SUPI;

An input key is $K_{AUSF}$.

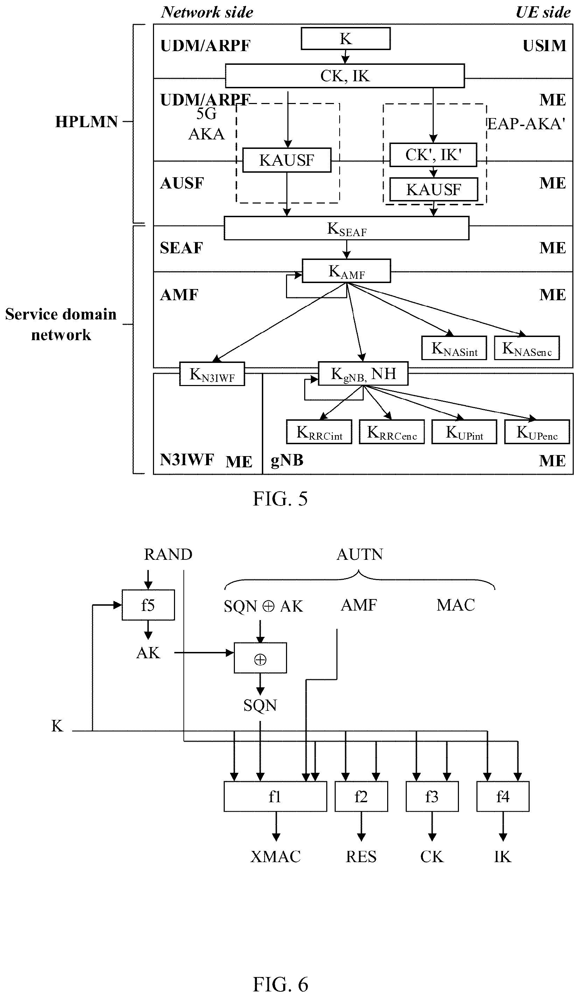

FIG. 5 is a schematic diagram of derivation processes of various keys according to an embodiment of this application.

The NAS security context in embodiments of this application may include $K_{AMF}$, lower-level derived keys $K_{NASint}$ and $K_{NASenc}$, and a key identifier corresponding to each key.

The access stratum (access stratum, AS) security context in embodiments of this application may include $K_{gNB}$, lower-level derived keys $K_{RRCint}$, $K_{RRCenc}$, $K_{UPint}$, and $K_{UPenc}$, and a key identifier corresponding to each key.

The keys in embodiments of this application may further include a confidentiality protection key (or referred to as an encryption key) and an integrity protection key. It may be learned from FIG. 5 that the confidentiality protection key and the integrity protection key may be generated based on $K_{AMF}$, or may be generated based on $K_{gNB}$. $K_{AMF}$ is a shared key between the AMF and the UE, and is also a shared key between a gNB and the UE.

To generate the confidentiality protection key and the integrity protection key, input parameters may be as follows:

- FC = 0xXX(for example, 00x69);
- P0 = algorithm type distinguisher (algorithm type distinguisher);
- L0 = length of algorithm type distinguisher (length of algorithm type distinguisher) (for example, 0x00, 0x01);
- P1 = algorithm identity (algorithm identity);
- L1 = length of algorithm identity (length of algorithm identity) (for example, 0x00, 0x01).

An input value of the algorithm type distinguisher varies depending on different keys to be generated, as shown in Table 1.

Table 1

| Algorithm type distinguisher | Value |
|---|---|
| N-NAS-enc-alg | 0x01 |
| N-NAS-int-alg | 0x02 |
| N-RRC-enc-alg | 0x03 |
| N-RRC-int-alg | 0x04 |
| N-UP-enc-alg | 0x05 |
| N-UP-int-alg | 0x06 |

An input value of the algorithm identity may also vary depending on different algorithms used. In embodiments of this application, an encryption algorithm used may include one or more of the following: NIA1, NIA2, or NIA3; and an integrity protection algorithm may include one or more of the following: EIA1, EIA2, or EIA3.

FIG. 6 shows manners of generating various parameters according to an embodiment of this application.

The UE may store a long-term key K and a public key of a home domain network, and the public key may be used to encrypt the SUPI. Five important parameters calculated in the USIM may include a message authentication code (message authentication code, MAC), a response (response, RES), a CK, an IK, and an AK. A calculation manner of these parameters may be as follows:

$$MAC = f1_K(SQN \parallel RAND \parallel AMF);$$
$$RES = f2_K (RAND);$$
$$CK = f3_K (RAND);$$
$$IK = f4_K (RAND);$$
$$AK = f5_K (RAND).$$

## Zero-power communication

With development of wireless communications technologies, it is desirable to integrate a wireless communications system with various vertical industries such as logistics, manufacturing, transportation, and energy. For example, the wireless communications system may be integrated with an industrial wireless sensor network (industrial wireless sensor network, IWSN). For another example, the wireless communications system may be integrated with smart logistics and smart warehousing. For another example, the wireless communications system may be integrated with an intelligent home network.

However, in these industries, a terminal device is generally required to have features such as a relatively low cost, a relatively small size (such as an ultra-thin size), maintenance-free, and long life. Therefore, to meet the foregoing conditions, a zero-power communication technology may be used to perform communication between a network device and the terminal device. In this case, the terminal device may also be referred to as a "zero-power communications terminal", a"zero-power terminal", or a tag (Tag).

After the zero-power terminal is introduced, the zero-power terminal currently has two communication modes. The following describes each of the two communication modes.

Communication mode 1 is a mode in which a zero-power terminal directly communicates with a base station. The base station may provide a wireless power supply signal and a trigger signal to the zero-power terminal. The wireless power supply signal may be used to supply energy to the zero-power terminal. The trigger signal may carry control information to be transmitted to the zero-power terminal. The zero-power terminal may transmit information to the base station via backscattering.

Communication mode 2 is a hybrid communication mode, that is, the communication mode includes both cellular communication and sidelink communication. In actual deployment of zero-power systems, zero-power communication systems based on cellular communication and sidelink communication may flexibly coexist or be used in combination, thereby matching more potential application scenarios.

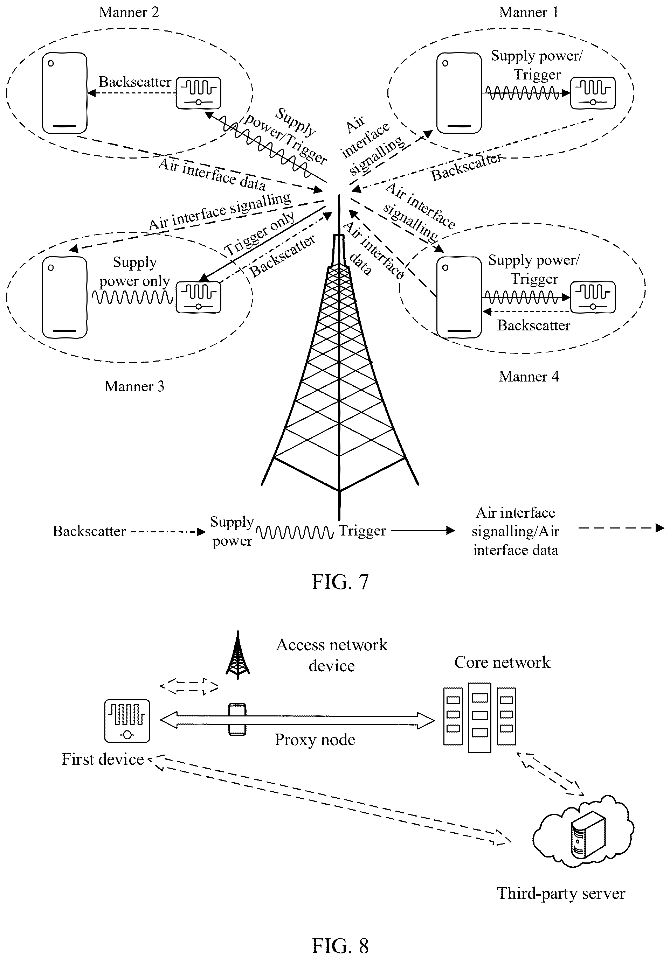

FIG. 7 shows a hybrid communications system. There are four communication modes shown in FIG. 7. The following describes each of the four communication modes.

Mode 1: A zero-power terminal is provided with an energy supply signal and a trigger signal by a terminal device, and a backscatter signal from the zero-power terminal is received by a base station.

Mode 2: The base station provides a wireless power supply signal and transmits trigger signalling to the zero-power terminal, while a backscatter signal from the zero-power terminal is received by a terminal device, thereby completing sidelink communication. In addition, the terminal device may transmit air interface data to the base station.

Mode 3: The terminal device provides a power supply signal to the zero-power terminal, while the base station transmits trigger information to the zero-power terminal and receives a backscatter signal from the zero-power terminal.

Mode 4: The terminal device receives air interface signalling and data transmitted by a network device. The terminal device provides a power supply signal and a trigger signal to the zero-power terminal, and receives the backscatter signal transmitted by the zero-power terminal to complete sidelink communication.

For a zero-power terminal, there is currently no clear solution for implementing security authentication between the zero-power terminal and a network side.

Currently, internet of things-oriented security standards for battery efficient security for very low throughput machine type communication devices (battery efficient security for very low throughput machine type communication devices, BEST), machine type communication (machine type communication, MTC), and new radio- internet of things (new radio- internet of things, NB-IoT) are based on authentication and key agreement mechanisms such as AKA, generic bootstrapping architecture (generic bootstrapping architecture, GBA), and AKMA. These mechanisms face challenges such as high complexity in key architectures, interaction procedures, and security computation. In the authentication modes as described above, in the process of generating the authentication vector, the terminal device is required to support various functions f1 to f5. The f1 function is used for the MAC, the f2 function is used for the RES, the f3 function is used for the CK, the f4 function is used for the IK, and the f5 function is used for the AK. Due to a relatively low computing capability of the zero-power terminal, this manner is not suitable for the zero-power terminal.

For an application scenario involving both cellular communication and sidelink communication, current user equipment-to-network relay (user equipment-to-network relay) security faces problems of high complexity in key architectures, interaction procedures, and security computation of proximity-based service communication (proximity-based service communication, PC5) security and U2N relay security, which also make such a security manner unsuitable for the zero-power terminal.

In addition, current international organization for standardization (international organization for standardization, ISO) radio frequency identification (radio frequency identification, RFID) security standards and tag and reader air interface security (tag and reader air interface security, TRAIS) security standards support only authentication and key agreement between a tag and a reader/writer (Reader), but do not support authentication and key agreement between a tag and a network side. In other words, these security standards cannot achieve authentication and key agreement between a tag and a network side.

To solve the foregoing problem, embodiments of this application provide an authentication method and an apparatus, which can implement an authentication and key agreement procedure in a simplified manner, and can be applicable to security authentication between a first device (for example, a zero-power terminal) and a network side. The authentication method in embodiments of this application only requires the first device to support one or two key generation algorithms to implement an authentication and key agreement procedure between the first device and the network side, thereby reducing complexity of the first device.

The first device in embodiments of this application may be a zero-power terminal. The first device may be, for example, a tag or an ambient power-enabled internet of things (ambient power-enabled internet of things, A-IoT) device.

Before the authentication method provided in this application is described, a communication mode of the first device and a security credential related to this application are first described.

In embodiments of this application, communication modes of the first device may be classified into two types depending on different protocol stack designs of the first device. The first type is an indirect mode (indirect mode), and the second type is a direct mode (direct mode).

For the indirect mode, the first device does not support an application layer protocol, and the first device may be connected to a service domain network element and/or an AF by using a proxy node.

The service domain network element in embodiments of this application may include one or more of the following: an AMF, a service management function (service management function, SMF), an SEAF, or an ambient network function (ambient network function, A-NF) specific to A-IoT services. The proxy node may include, for example, a terminal device and/or an integrated access and backhaul (integrated access and backhaul, IAB) node. The terminal device may be, for example, UE.

In some implementations, the proxy node may forward authentication information between the first device and the network side (such as an authentication network element). In some other implementations, the proxy node may further perform some processing on the authentication information. For example, the proxy node may transmit the authentication information by using a NAS message (such as a NAS security context) or an AS message (such as an AS security context). For another example, the proxy node may decrypt some encrypted information (for example, a concealed identifier of the first device) in an authentication process. A specific processing manner of the proxy node is described in detail below with reference to specific embodiments.

For the direct mode, the first device may support an application layer protocol (such as a hyper text transfer protocol (hyper text transfer protocol, HTTP)). Alternatively, a medium access control (media access control, MAC) layer or a physical (physical, PHY) layer of the first device has a function of supporting upper-layer protocols (such as the application layer), thereby enabling the first device to support application layer protocol functions. In some implementations, the first device may be connected to the AF by using an application layer protocol.

In embodiments of this application, a secure communication link may be established between the first device and a third-party server (such as an AF). The third-party server may perform authentication and key agreement with the first device via a core network. Depending on different security credential providers, security credentials in embodiments of this application may be classified into two types. One type of security credential is 3GPP security credential, and the other type of security credential is non-3GPP security credential.

The 3GPP security credential may be understood as a root key (K for short) shared between the first device and an authentication network element. If the security credential is a 3GPP security credential, the network side (such as the UDM) may perform authorization management, such as storing authentication results. The management authorization may be authorization management based on a subscription credential. The authentication result may include, for example, one or more of the following: a time stamp of authentication of the first device, an ID of the first device, an authentication mode of the first device, or an identifier of a security context of the first device.

FIG. 8 shows a communication architecture based on a 3GPP security credential. The first device may perform an authentication and key agreement procedure with the core network. In some implementations, the first device may communicate with a third-party server, and the third-party server may communicate with the core network.

The non-3GPP security credential may be a security credential, such as a root key (K for short) shared between the first device and the AF or a network application function (network application function, NAF), provided by a third-party application server. The third-party application server (such as the AF or the NAF) may perform authorization management. The authorization management may be authorization management based on an application layer. In a scenario involving a proxy node, the third-party application server may manage a mapping between the proxy node and the first device, and provide a security credential K to the authentication network element, or provide a lower-level key derived from a security credential K to the authentication network element.

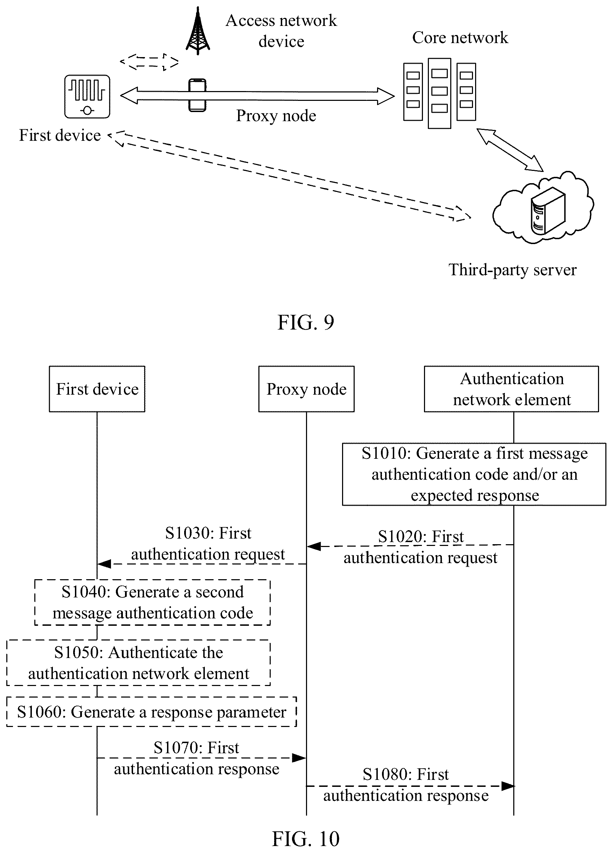

FIG. 9 shows a communication architecture based on a 3GPP security credential. FIG. 9 differs from FIG. 8 in that the third-party server may communicate with the core network so as to provide a security credential K or a lower-level key derived from a security credential K to the core network.

It should be noted that the security credential in embodiments of this application may be understood as a root key.

The following describes in detail the authentication mode in embodiments of this application with reference to FIG. 10 to FIG. 20. It should be noted that the following four examples and solutions in different accompanying drawings may be used in combination without conflicts.

**Example 1**

In the solution of Example 1, the security credential is a 3GPP security credential, and the first device communicates with the network side via the proxy node.

FIG. 10 is a schematic flowchart of an authentication method according to an embodiment of this application. Referring to FIG. 10, in step S1010, an authentication network element generates a first message authentication code and/or an expected response. The first message authentication code may be used to authenticate the authentication network element. The expected response may be used to authenticate the first device. In some embodiments, the first message authentication code may be denoted as first MAC, and the expected response may be denoted as XRES.

A manner of generating the first message authentication code is not specifically limited in embodiments of this application. For example, the first message authentication code may be generated based on a first key generation algorithm and a first parameter. The first key generation algorithm may be any function. The function may be any one of the following: an f function, a KDF function, or another lightweight function. The f function may be, for example, any one of an f1 function, an f2 function, an f3 function, an f4 function, or an f5 function defined by 3GPP. The KDF may be, for example, HMAC-SHA-256 or HMAC-SM3. The lightweight function may be, for example, ASCON.

The first parameter may include one or more of the following: a security credential, a first random number, a second random number, or a first key. For example, the first parameter may include the security credential and the second random number. For another example, the first parameter may include the security credential, the second random number, and the first key. For another example, the first parameter may include the security credential, the second random number, and the first random number. For another example, the first parameter may include the security credential, the second random number, the first random number, and the first key.

The security credential may be the 3GPP security credential or non-3GPP security credential described above. The first random number (denoted as N2) may be a random number selected by the authentication network element, or may be a shared key between the authentication network element and the first device. The first random number may be used to resist replay attacks. The second random number (denoted as RAND) may be a random number selected by the authentication network element. The first key (denoted as N1) may be one or more of the following: a random number pre-shared between the first device and a network side device (such as the authentication network element), a shared key between the first device and the proxy node, or a shared key between the first device and a base station. The shared key may be a physical layer key.

In some embodiments, the first message authentication code and the expected response may be generated based on a same key generation algorithm and different parameters, or the first message authentication code and the expected response may be generated based on different key generation algorithms and a same parameter, which can reduce complexity of generating the first message authentication code and the expected response.

In an example, a key generation algorithm used to generate the expected response matches a key generation algorithm used to generate the first message authentication code. For example, the first message authentication code may be generated based on the first key generation algorithm and the first parameter, and the expected response may be generated based on the first key generation algorithm and a second parameter.

The second parameter may include one or more of the following: the security credential, the first random number, the second random number, or the first key. The first parameter is different from the second parameter, so as to ensure that the generated expected response is different from the first message authentication code. For example, the first parameter includes the security credential and the first random number. The second parameter includes the security credential, the first random number, and the second random number. For another example, the second parameter includes the security credential, the first random number, and the second random number; and the second parameter includes the security credential, the first random number, the second random number, and the first key. For another example, the first parameter includes the security credential, the first random number, and the second random number; and the second parameter includes the security credential and the first random number.

In another example, a parameter used to generate the expected response matches a parameter used to generate the first message authentication code. For example, the first message authentication code may be generated based on the first key generation algorithm and the first parameter, and the expected response may be generated based on a second key generation algorithm and the second parameter.

The first key generation algorithm is different from the second key generation algorithm, so as to ensure that the generated expected response is different from the first message authentication code. The second key generation algorithm may be any function. For example, the second key generation algorithm may be any one of the following: the f function, the KDF, or another lightweight function. The f function may be, for example, any one of an f1 function, an f2 function, an f3 function, an f4 function, or an f5 function defined by 3GPP. The KDF may be, for example, HMAC-SHA-256 or HMAC-SM3. The lightweight function may be, for example, ASCON.

Similarly, the first device may generate a second message authentication code and/or a response parameter. The second message authentication code may be used to authenticate the authentication network element, and the response parameter may be used to authenticate the first device. In some embodiments, the second message authentication code may be denoted as second MAC, and the response parameter may be denoted as RES.

In some embodiments, a manner of generating the second message authentication code is the same as a manner of generating the first message authentication code. For example, the second message authentication code may be generated based on the first key generation algorithm and the first parameter. For the first key generation algorithm and the first parameter, reference may be made to the foregoing description. For brevity, details are not described herein again.

For example, the message authentication code may be determined according to one or more of the following formulas: MAC = $f_K$(RAND,N1,N2), MAC = $f_K$(RAND), MAC = $f_K$(RAND,N1), or MAC = $f_K$(RAND, N2).

The expected response may be determined according to one or more of the following formulas: XRES = $f_K$(RAND,N1,N2), XRES = $f_K$(RAND), XRES = $f_K$(RAND,N1), or XRES = $f_K$(RAND, N2).

MAC denotes the first message authentication code or the second message authentication code, f denotes the first key generation algorithm or the second key generation algorithm, RAND denotes the second random number, N1 denotes the first key, N2 denotes the second random number, and K denotes the security credential.

In some embodiments, a manner of generating the response parameter is the same as a manner of generating the expected response. For example, the response parameter may be generated based on the second key generation algorithm and the first parameter, and the response parameter may be generated based on the first key generation algorithm and the second parameter. For a specific generation manner of the response parameter, reference may be made to the manner of generating the expected response as mentioned above. For brevity, details are not described herein again.

In some embodiments, the first device may receive the first message authentication code from the authentication network element. The first device may receive the first message authentication code from the authentication network element via the proxy node. The first device may compare the first message authentication code with the second message authentication code, to authenticate the authentication network element. If the first message authentication code matches the second message authentication code, it indicates that the authentication on the authentication network element is successful. If the first message authentication code does not match the second message authentication code, it indicates that the authentication on the authentication network element fails.

In some embodiments, the authentication network element may receive the response parameter from the first device. The authentication network element may receive the response parameter from the first device via the proxy node. The authentication network element may compare the response parameter with the expected response to authenticate the first device. If the response parameter matches the expected response, it indicates that the authentication on the first device is successful. If the response parameter is does not match the expected response, it indicates that the authentication on the first device fails.

In some implementations, the method shown in FIG. 10 may further include steps S1020 to S1070.

In step S1020, the authentication network element transmits a first authentication request to the proxy node. The first authentication request includes the first message authentication code.

The authentication network element transmitting the first authentication request to the proxy node may refer to that the authentication network element directly transmits the first authentication request to the proxy node, or may refer to that the authentication network element transmits the first authentication request to the proxy node via another device. The another device may include, for example, a base station and/or a service domain network element. The service domain network element may include an AMF and/or an SMF.

In step S1030, the proxy node transmits the first authentication request to the first device.

In step S1040, the first device generates the second message authentication code based on the first key generation algorithm and the first parameter. For a specific generation manner, reference may be made to the foregoing description. In some embodiments, the first device may generate the second message authentication code before receiving the first authentication request, or the first device may generate the second message authentication code after receiving the first authentication request.

In step S1050, the first device authenticates the authentication network element based on the first message authentication code and the second message authentication code. If the first message authentication code matches the second message authentication code, the first device may determine that the authentication network element is successfully authenticated. If the first message authentication code does not match the second message authentication code, the first device may determine that the authentication network element fails to be authenticated.

In step S1060, the first device generates a response parameter in a case in which the authentication network element is successfully authenticated. If the authentication network element fails to be authenticated, the first device may not generate the response parameter, so as to reduce a calculation amount of the first device. Certainly, in some embodiments, the first device may generate the response parameter regardless of whether the authentication network element is successfully authenticated. For example, the first device may generate the response parameter before receiving the first authentication request.

In step S1070, the first device transmits a first authentication response to the proxy node. The first authentication response may include the response parameter.

In step S1080, the proxy node transmits the first authentication response to the authentication network element. The first authentication response may include the response parameter.

In some embodiments, the proxy node may transmit the response parameter to the authentication network element. After receiving the response parameter, the authentication network element may compare the response parameter with the expected response, to authenticate the first device.

To improve authentication security, in embodiments of this application, the first device may be authenticated from the perspective of a home domain network, a service domain network, and an access network. For example, the response parameter may include one or more of the following: a first response parameter, a second response parameter, or a third response parameter. The first response parameter may be used to authenticate the first device by the home domain network (or a home domain network element), the second response parameter may be used to authenticate the first device by the service domain network (or a service domain network element), and the third response parameter may be used to authenticate the first device by an access network (or an access network device). The first response parameter may be denoted as RES1, the second response parameter may be denoted as RES2, and the third response parameter may be denoted as RES3.

For another example, the expected response may include one or more of the following: a first expected response, a second expected response, or a third expected response. The first expected response may be used to authenticate the first device by the home domain network (or a home domain network element), the second expected response may be used to authenticate the first device by a service domain network (or a service domain network element), and the third expected response may be used to authenticate the first device by an access network (or an access network device). The first expected response may be denoted as XRES1, the second expected response may be denoted as XRES2, and the third expected response may be denoted as XRES3.

In some embodiments, the expected response may include a first expected response and a second expected response, to authenticate the first device from the perspective of the home domain network and the service domain network. In some embodiments, the expected response may include the first expected response and the third expected response, to authenticate the first device from the perspective of the home domain network and the access network. In some embodiments, the expected response may include the second expected response and the third expected response, to authenticate the first device from the perspective of the service domain network and the access network. In some embodiments, the expected response may include the first expected response, the second expected response, and the third expected response, to authenticate the first device from the perspective of the home domain network, the service domain network, and the access network.

The following describes an authentication mode used for authenticating the first device by each network.

The home domain network element may compare the first response parameter with the first expected response to authenticate the first device. The first expected response may be generated by the home domain network element, and the first response parameter may be generated by the first device. The first device may transmit the first response parameter to the home domain network element. If the first response parameter matches the first expected response, the home domain network element may consider, from the perspective of the home domain network, that the authentication is successful. If the first response parameter does not match the first expected response, the home domain network element may consider, from the perspective of the home domain network, that the authentication fails. The home domain network element may include an AUSF and/or a UDM.

The service domain network element may compare the second response parameter with the second expected response to authenticate the first device. The second expected response may be generated by the home domain network element, and the home domain network element may transmit the second expected response to the service domain network element. The second response parameter may be generated by the first device, and the first device may transmit the second response parameter to the service domain network element. If the second response parameter matches the second expected response, the service domain network element may consider, from the perspective of the service domain network, that the authentication is successful. If the second response parameter does not match the second expected response, the service domain network element may consider, from the perspective of the service domain network, that the authentication fails. The service domain network element may include an AMF and/or an SMF.

The access network device may compare the third response parameter with the third expected response to authenticate the first device. If the third response parameter matches the third expected response, the access network device may consider, from the perspective of the access network, that the authentication is successful. If the third response parameter does not match the third expected response, the access network device may consider, from the perspective of the access network, that the authentication fails. The access network device may be a base station.

In some embodiments, the third expected response may be generated by the home domain network element, and the home domain network element may transmit the third expected response to the access network device. Alternatively, the third expected response may be generated by the access network device. The authentication network element may transmit the first expected response to the access network device, and the access network device generates the third expected response based on the first expected response received. For example, in a case in which the first key is a shared key between the first device and the access network device, the access network device may generate the third expected response based on the first expected response and the first key.

In some embodiments, the third response parameter may be generated by the first device, and the first device may transmit the third response parameter to the access network device.

The following describes a manner of generating each response parameter and each expected response.

In some embodiments, the first response parameter and the second message authentication code (or the first message authentication code) are based on a same key generation algorithm, so as to reduce computing complexity of the first device. For example, the first response parameter may be generated based on the first key generation algorithm and the second parameter. In other words, the first device may generate the first response parameter based on the first key generation algorithm and the second parameter.

In some embodiments, the first response parameter and the second message authentication code (or the first message authentication code) are based on a same parameter, so as to reduce computing complexity of the first device. For example, the first response parameter may be generated based on the second key generation algorithm and the first parameter. In other words, the first device may generate the first response parameter based on the second key generation algorithm and the first parameter. A manner of generating the first response parameter may be consistent with a manner of generating the expected response described above.

For example, the first response parameter may be determined according to the following formula:

$$RES1 = f_K(RAND, N1, N2)$$

RES1 denotes the first response parameter, f denotes the first key generation algorithm or the second key generation algorithm, RAND denotes the second random number, N1 denotes the first key, N2 denotes the second random number, and K denotes the security credential.

In some embodiments, the second response parameter may be generated based on the first response parameter and the third parameter. In other words, the first device may generate the second response parameter based on the first response parameter and the third parameter. The third parameter may include one or more of the following: the security credential, or a service domain network name (SN name) (or a service domain network identifier). In some implementations, the second response parameter and the first response parameter may be generated based on a same key generation algorithm, or the second response parameter and the second message authentication code (or the first message authentication code) may be generated based on a same key generation algorithm. For example, the second response parameter may be generated based on the first key generation algorithm, the first response parameter, and the third parameter. For another example, the second response parameter may be generated based on the second key generation algorithm, the first response parameter, and the third parameter.

For example, the second response parameter may be determined according to the following formula:

$$RES2 = f_K(RES1, SN\ name)$$

RES2 denotes the second response parameter, f denotes the first key generation algorithm or the second key generation algorithm, RES1 denotes the first response parameter, SN name denotes a service domain network name or identifier, and K denotes the security credential.

In some embodiments, the third response parameter may be generated based on the first response parameter and the fourth parameter. In other words, the first device may generate the third response parameter based on the first response parameter and the fourth parameter. The fourth parameter may include the first key. In some implementations, the third response parameter and the first response parameter may be generated based on a same key generation algorithm, or the third response parameter and the second message authentication code (or the first message authentication code) may be generated based on a same key generation algorithm. For example, the third response parameter may be generated based on the first key generation algorithm, the first response parameter, and the fourth parameter. For another example, the third response parameter may be generated based on the second key generation algorithm, the first response parameter, and the fourth parameter.

For example, the third response parameter may be determined according to the following formula:

$$RES3 = f_{N1}(XRES1)$$

RES3 denotes the third response parameter, f denotes the first key generation algorithm or the second key generation algorithm, RES1 denotes the first response parameter, and N1 denotes the first key.

The manners of generating the response parameters described above are merely examples, which is not specifically limited in embodiments of this application. For example, the second response parameter may be generated based on the third response parameter. For another example, the third response parameter may be generated based on the second response parameter.

The manner of generating the first expected response is similar to the manner of generating the first response parameter, the manner of generating the second expected response is similar to the manner of generating the second response parameter, and the manner of generating the third expected response is similar to the manner of generating the third response parameter. For brevity, details are not described herein again.

In some embodiments, the authentication network element may generate a first anonymous key. The first anonymous key may be used for secure transmission between the first device and the network side.

In some embodiments, to reduce computing complexity of generating the first anonymous key, the first anonymous key may be generated based on the first key generation algorithm or the second key generation algorithm. For example, the first anonymous key may be generated based on the first key generation algorithm and a ninth parameter. For another example, the first anonymous key may be generated based on the second key generation algorithm and the ninth parameter. The ninth parameter may include one or more of the following parameters: the security credential, the first random number, the second random number, or the first key.

Assuming that the ninth parameter includes the security credential and the second random number, the first anonymous key may be determined according to the following formula:

$$AK = f_K(RAND)$$

AK denotes the first anonymous key, K denotes the security credential, RAND denotes the second random number, and f denotes the first key generation algorithm or the second key generation algorithm.

The formula $AK = f_K(RAND)$ is applicable to a case in which the first key is a shared key between the first device and the authentication network element, and is also applicable to a case in which the first key is transmitted by the proxy node to the authentication network element.

In some embodiments, to reduce computing complexity of generating the first anonymous key, the first anonymous key may be generated by performing an exclusive OR operation. For example, the first anonymous key may be generated by performing an exclusive OR operation on the security credential and the first key. That is, the first anonymous key may be determined according to the following formula:

$$AK = K \oplus N1$$

AK denotes the first anonymous key, K denotes the security credential, N1 denotes the first key, and $\oplus$ denotes the exclusive OR operation.

The formula $AK = K \oplus N1$ is applicable to a case in which the first key is a shared key between the first device and the authentication network element. The authentication network element may generate AK based on the shared key N1.

Similarly, the first device may further generate a second anonymous key. A manner of generating the second anonymous key is the same as the manner of generating the first anonymous key. For brevity, details are not described herein again.

Before receiving the first authentication request from the proxy node, the first device may transmit a second authentication request to the proxy node. In other words, the first device may transmit the second authentication request to trigger an authentication procedure between the first device and the network side.

In some embodiments, the second authentication request may include a concealed identifier of the first device. To ensure information security, the first device may anonymize the identifier of the first device to obtain the concealed identifier.

There are a plurality of manners of generating the concealed identifier. For example, the concealed identifier may be generated based on the identifier of the first device and the first key. For another example, the concealed identifier may be generated based on the identifier of the first device, the first key, and the security credential. The identifier of the first device may be understood as a real identifier of the first device.

A manner of generating the concealed identifier is described in detail below by using an example in which the concealed identifier is generated based on the identifier of the first device and the first key.

In some embodiments, the concealed identifier may be generated by performing an exclusive OR operation, so as to reduce computing complexity of the first device. For example, the concealed identifier may be generated by performing an exclusive OR operation on the identifier of the first device and the first key. In other words, the first device may perform an exclusive OR operation on the identifier of the first device and the first key to generate the concealed identifier.

For example, the concealed identifier may be determined according to the following formula:

$$DIDi = IDi \oplus N1$$

DIDi denotes the concealed identifier, IDi denotes the identifier of the first device, N1 denotes the first key, and $\oplus$ denotes the exclusive OR operation.

In some embodiments, the concealed identifier may be generated based on the identifier of the first device, the first key, and a third key generation algorithm. In other words, the first device may generate the concealed identifier based on the identifier of the first device, the first key, and the third key generation algorithm. The third key generation algorithm may be the first key generation algorithm or the second key generation algorithm, so as to reduce computing complexity of the first device.

For example, the concealed identifier may be determined according to the following formula:

$$DIDi = f_{N1}(IDi)$$

DIDi denotes the concealed identifier, IDi denotes the identifier of the first device, N1 denotes the first key, and f denotes the third key generation algorithm.

The first key may be a shared key (or a random number) between the first device and the network side (such as the authentication network element), a shared key between the first device and the proxy node, or a shared key between the first device and the base station. The shared key may be a physical layer key. If the first key is a physical layer key, the first device may obtain the first key by extracting a physical layer channel feature instead of storing the first key in advance.

If the first key may be a shared key between the first device and the network side (such as the authentication network element), the authentication network element may transmit a new first key to the first device to update the concealed identifier.

A manner in which the first device generates the concealed identifier may vary depending on different first keys. For example, if the first key is a shared key between the first device and the network side, the concealed identifier may be generated according to the formula: DIDi = IDi $\oplus$ N1. For another example, if the first key is a shared key between the first device and the proxy node, the concealed identifier may be generated according to the formula: DIDi = IDi $\oplus$ N1; or the formula: DIDi = $f_{N1}$ (IDi).

After receiving the second authentication request, the proxy node may transmit the second authentication request to the authentication network element. The second authentication request transmitted by the proxy node may include one or more of the following information: the first key, the identifier of the first device, the concealed identifier, or an identifier of the proxy node. The identifier of the proxy node may include one or more of the following: a GPSI, a SUCI, a globally unique temporary identifier (globally unique temporary identifier, GUTI), or a SUPI.

In some embodiments, the proxy node may use different processing policies depending on different first keys. In an example, if the first key is a shared key between the first device and the network side, the second authentication request transmitted by the proxy node may include one or more of the following: the concealed identifier or the identifier of the proxy node.

In another example, if the first key is a shared key between the first device and the proxy node, the proxy node may de-anonymize the concealed identifier to obtain the identifier of the first device. For example, the proxy node may determine the identifier of the first device based on the first key and the concealed identifier.

If the concealed identifier is generated by performing an exclusive OR operation on the first key and the identifier of the first device, the proxy node may determine the identifier of the first device according to the following formula:

$$IDi = DIDi \oplus N1$$

DIDi denotes the concealed identifier, IDi denotes the identifier of the first device, N1 denotes the first key, and $\oplus$ denotes the exclusive OR operation.

If the concealed identifier is generated based on the first key, the identifier of the first device, and the third key generation algorithm, the proxy node may determine the identifier of the first device according to the following formula:

$$IDi = f_{N1}(DIDi)$$

DIDi denotes the concealed identifier, IDi denotes the identifier of the first device, N1 denotes the first key, and f denotes the third key generation algorithm.

After the identifier of the first device is obtained, the second authentication request transmitted by the first device may include one or more of the following: the first key, the identifier of the first device, or the identifier of the proxy node.

If the second authentication request includes the identifier of the first device, to ensure information security, the proxy node may transmit a second authentication request message by using a NAS message or an AS message. For example, the proxy node may transmit the second authentication request message by using a NAS security context or an AS security context.

After the authentication network element receives the second authentication request, if the second authentication request includes the concealed identifier, the authentication network element may obtain the identifier of the first device by de-anonymizing the concealed identifier. For example, if the first key is a shared key between the first device and the authentication network element, the authentication network element may de-anonymize the concealed identifier based on the first key. For example, the authentication network element may obtain the identifier of the first device according to the formula IDi = DIDi ⊕ N1.

After obtaining the identifier of the first device, the authentication network element may generate a fourth key below based on the identifier of the first device.

In a case in which authentication between the first device and the authentication network element is successful, the first device and the authentication network element may generate a second key (denoted as Ks). The second key may also be understood as a shared key between the first device and the authentication network element. The second key may be generated based on a sixth key generation algorithm and a sixth parameter. The sixth key generation algorithm may be the first key generation algorithm or the second key generation algorithm, so as to reduce computing complexity of the first device. The sixth parameter may include one or more of the following parameters: the first anonymous key, the first key, the first random number, the identifier of the proxy node, the identifier of the first device, the service domain network name, or a home network identifier.

For example, the second key may be determined according to the following formula:

$$Ks = f_{AK}(N1, N2, UE\ ID, IDi, SN\ name)$$

Ks denotes the second key, AK denotes the first anonymous key, N1 denotes the first key, N2 denotes the first random number, UE ID denotes the identifier of the proxy node, IDi denotes the identifier of the first device, SN name denotes the service domain network name, and f denotes the sixth key generation algorithm.

**Generation of an AKMA key**

The second key described above may be used to generate the AKMA key. That is, the first device may generate the AKMA key based on the second key. Alternatively, the authentication network element may generate the AKMA key based on the second key.

It may be understood that a manner in which the first device generates the AKMA key is the same as a manner in which the authentication network element generates the AKMA key. A manner of generating the AKMA key is described by using the first device as an example. For the manner in which the authentication network element generates the AKMA key, reference may be made to the manner in which the first device generates the AKMA key. For brevity, details are not repeated.

The first device may generate the AKMA key based on the second key and a fourth key generation algorithm. The fourth key generation algorithm may be the first key generation algorithm or the second key generation algorithm, so as to reduce computing complexity of the first device. In some embodiments, the first device may generate the AKMA key based on the second key, the fourth key generation algorithm, and a fifth parameter. The fifth parameter may include one or more of the following: AKMA, or the identifier of the first device.

For example, the AKMA key may be determined according to the following formula:

$$K_{AKMA} = f_{Ks}(\text{``AKMA''}, \text{``IDi''})$$

$K_{AKMA}$ denotes the AKMA key, Ks denotes the first anonymous key, and IDi denotes the identifier of the first device.

In some embodiments, the second key may be used to generate a key identifier. In other words, the first device may generate the key identifier based on the second key. The key identifier may include, for example, the A-TID and/or the A-KID. For example, the A-TID may be generated based on the identifier of the first device, the first anonymous key, and a seventh key generation algorithm. The seventh key generation algorithm may be the first key generation algorithm or the second key generation algorithm.

For example, the A-TID may be determined according to the following formula:

$$A\text{-}TID = f_{Ks}(IDi)$$

In which, f denotes the seventh key generation algorithm, Ks denotes the first anonymous key, and IDi denotes the identifier of the first device.

In some embodiments, the A-KID may be generated based on the A-TID. For example, the A-KID may be generated based on the A-TID and a seventh parameter. The seventh parameter may include one or more of the following parameters: the RID, or the home network identifier (home network identifier, HNI). To reduce computing complexity of the first device, the A-KID may be obtained by concatenating the A-TID, the RID, and the seventh parameter.

For example, the A-KID may be determined according to the following formula:

$$A\text{-}KID = A\text{-}TID\|RID\|HNI$$

In some embodiments, the authentication network element may transmit a key parameter to the AAnF and/or a key management server (key management server, KMS), where the key parameter may include one or more of the following: the AKMA key, the A-KID, or the identifier of the first device.

In some embodiments, after receiving the AKMA key, the AAnF and/or the AMF may generate an application key (denoted as $K_{AF}$) based on the AKMA key. The application key may be generated based on an eighth key generation algorithm and an eighth parameter. The eighth parameter may include one or more of the following parameters: the AF ID, the IDi, the identifier of the proxy node, or the A-KID. The eighth key generation algorithm may be the first key generation algorithm or the second key generation algorithm, so as to reduce computing complexity of the first device.

For example, the application key may be determined according to the following formula:

$$K_{AF} = f_{Ks}(AF\ ID,\ IDi,\ UE\ ID,\ A\text{-}KID)$$

$K_{AF}$ denotes the application key, f denotes the eighth key generation algorithm, the AF ID denotes the identifier of the AF, the IDi denotes the identifier of the first device, and the UE ID denotes the identifier of the proxy node.

In some embodiments, the AAnF may generate the application key after receiving an application key request message from the AF.

It may be understood that a manner in which the first device generates the application key is the same as a manner in which the AAnF generates the application key. For brevity, details are not described herein again. In some embodiments, the first device may generate the application key after transmitting an application session establishment request message to the AF.

In some embodiments, the application key may be used to generate a third key. The third key may be used for secure communication between the first device and the proxy node. That is, the first device and the proxy node may perform secure communication with each other based on the third key.

In some implementations, the third key may include an integrity protection key and/or an encryption key. That is, the first device and the proxy node may generate the integrity protection key and/or the encryption key based on the application key. A manner of generating the integrity protection key and/or the encryption key based on the application key may be a manner in a related technology, which is not specifically limited in embodiments of this application.

In some implementations, the third key may be generated based on the application key and the first key. The first key is a shared key between the first device and the proxy node. To reduce computing complexity of the first device, the third key may be generated by performing an exclusive OR operation on the application key and the first key.

For example, the third key may be determined according to the following formula:

$$Ku1 = K_{AF} \oplus N1$$

Ku1 denotes the third key, $K_{AF}$ denotes the application key, N1 denotes the first key, and $\oplus$ denotes the exclusive OR operation.

In some embodiments, the third key (for example, Ku1) may be used to further generate the integrity protection key and/or the encryption key. In embodiments of this application, by first generating the third key and then generating the integrity protection key and/or the encryption key, the mobility management of the first device is simplified. For example, if the first device moves, and consequently there is a change in the connected proxy node, the first device may directly generate the third key based on the shared key between the first device and the proxy node, and further generate the integrity protection key and/or the encryption key. In this way, an authentication and key agreement procedure between the first device and the network side may be skipped.

For example, if the proxy node connected to the first device changes from a first proxy node to a second proxy node, a shared key between the first device and the first proxy node is denoted as N1, and a shared key between the first device and the second proxy node is denoted as N3, when the first device is connected to the first proxy node, the first device may generate the third key based on the application key and N1, and further generate an integrity protection key and/or an encryption key for performing secure communication with the first proxy node. When the first device is connected to the second proxy node, the first device may generate the third key based on the application key and N3, and further generate an integrity protection key and/or an encryption key for performing secure communication with the second proxy node. It may be learned from the foregoing description that when there is change in a connected proxy node, the first device may skip an authentication and key agreement procedure to generate different integrity protection keys and/or encryption keys, and may generate different integrity protection keys and/or encryption keys based on different first keys, so as to perform secure communication with different proxy nodes.

In a case in which the first message authentication code is required to be generated based on the first random number, if the first random number is selected by the authentication network element, the authentication network element may further transmit the first random number to the first device, such that the first device may generate the second message authentication code based on the first random number.

In some embodiments, to ensure security of the first random number, the authentication network element may protect transmission security of the first random number by using the first anonymous key. To reduce computing complexity, the authentication network element may perform an exclusive OR operation on the first anonymous key and the first random number to obtain a tenth parameter, that is, the tenth parameter may be N2 ⊕ AK. The authentication network element may transmit the tenth parameter to the first device, or the authentication network element may transmit an eleventh parameter to the first device, where the eleventh parameter may be N2 ⊕ AK∥MAC. MAC denotes the first message authentication code, N2 denotes the first random number, AK denotes the first anonymous key, and ∥ denotes concatenation.

After receiving the tenth parameter or the eleventh parameter transmitted by the authentication network element, the first device may determine the first random number based on the first anonymous key. Then, the second message authentication code is generated based on the first random number. Further, the first device may authenticate the authentication network element based on the first message authentication code and the second message authentication code.

In some embodiments, in a case in which the first message authentication code is generated based on the second random number, the authentication network element may further transmit the second random number to the first device, such that the first device generates the second message authentication code based on the second random number.

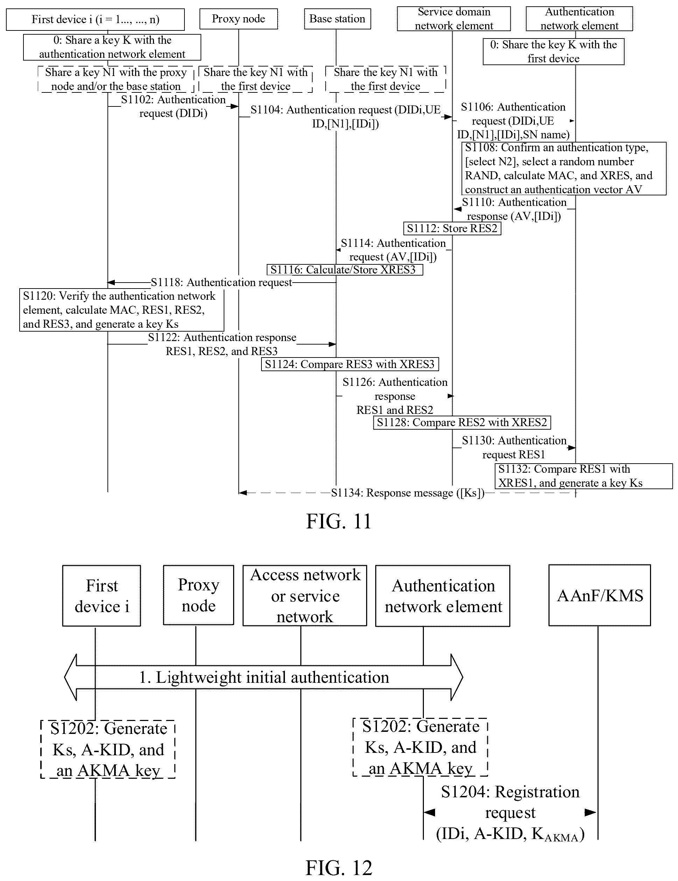

With reference to FIG. 11 to FIG. 13, the following describes in detail an authentication and key agreement procedure in which the proxy node participates.

FIG. 11 shows a procedure of performing authentication between the first device and the authentication network element. The first device may share the key K with the authentication network element, where the key K is the security credential described above. The first device may share the key N1 with the base station and/or the proxy node, where the key N1 is the first key described above. The key N1 may be a physical layer key.

Referring to FIG. 11, in step S1102, the first device transmits an authentication request to the proxy node. The authentication request may include the concealed identifier DIDi of the first device. The concealed identifier DIDi may be generated based on the identifier IDi of the first device.

There are two manners of generating the concealed identifier DIDi. If N1 is a key (or a random number) pre-shared between the first device and the AUSF, the DIDi may be determined according to the following formula: DIDi = IDi ⊕ N1. After the security context of the first device is established, the AUSF may transmit a new first key to the first device to update the DIDi.

If N1 is a shared key (for example, a physical layer key) between the first device and the proxy node, the DIDi may be determined according to the formula: DIDi = IDi ⊕ N1; or DIDi = $f_{N1}$(IDi).

In step S1104, the proxy node transmits the authentication request to the service domain network element. In some implementations, the proxy node may transmit the authentication request to the service domain network element via the base station. The service domain network element may include one or more of an AMF, an SEAF, an SMF, or an A-NF.

In some embodiments, the authentication request may include the DIDi and the identifier of the proxy node. For example, if N1 is a shared key between the first device and the authentication network element, the authentication request may include the DIDi and the identifier of the proxy node.

In some embodiments, if N1 is a shared key between the first device and the proxy node, the proxy node may de-anonymize the DIDi based on N1, to obtain the identifier IDi of the first device. The authentication request transmitted by the proxy node may include one or more of the following: the IDi, the identifier of the proxy node, or N1.

The identifier of the proxy node may include one or more of the GPSI, the SUCI, or the GUTI.

To ensure information security, the proxy node may transmit the authentication request by using a NAS message. For example, the proxy node may transmit the authentication request by using a NAS security context.

In step S1106, the service domain network element transmits the authentication request to the authentication network element, and the authentication request may include the service domain network name (SN name). The authentication request may further include the DIDi and the identifier of the proxy node. Alternatively, the authentication request may include the IDi, N1, and the identifier of the proxy node.

In some embodiments, the authentication request may include indentification capable of indicating an authentication type. The indentification of the authentication type may be indicated by using one or more of the following: a BSF ID, an identifier type of the A-NF, a type of the IDi, or an authentication type identifier (Auth_type_ID).

In step S1108, the authentication network element may confirm the authentication type.

The authentication network element may query subscription credentials of the first device and the proxy node by using a core network element (such as the UDM). The core network element may check, based on the IDi and the identifier of the proxy node, the subscription credentials of the first device and the proxy node, so as to determine whether the first device is authorized to use A-IoT services.

The authentication network element may determine the authentication type based on the identifier that indicates the authentication type, for example, determine whether the authentication type is A-IoT authentication.

If the authentication request received by the authentication network element includes the DIDi, the authentication network element may de-anonymize the DIDi to obtain the IDi. For example, if N1 is a shared key between the first device and the authentication network element, the authentication network element may de-anonymize the DIDi based on N1, so as to obtain the IDi. For example, the IDi may be determined according to the formula IDi = DIDi $\oplus$ N1.

The authentication network element may generate the first anonymous key AK. If N1 is a shared key between the first device and the authentication network element, the first anonymous key AK may be determined according to the formula AK = K $\oplus$ N1. If N1 is a shared key between the first device and the proxy node (the proxy node may transmit N1 to the authentication network element), or N1 is a shared key between the first device and the authentication network element, the first anonymous key AK may be determined according to the formula AK = $f_K$(RAND). RAND is a random number selected by the authentication network element.

The authentication network element may generate the first message authentication code (denoted as MAC) and the first expected response (denoted as XRES1). MAC and XRES1 may be determined according to a formula MAC/XRES1 = $f_K$(RAND,N1,N2). N2 may be a shared key between the first device and the authentication network element, or N2 is a random number selected by the authentication network element.

The parameters introduced in the manner of generating MAC and XRES1 described above include RAND, N1, and N2. However, this is merely an example. This is not specifically limited in embodiments of this application. For example, the parameters introduced in the manner of generating MAC and XRES1 may include only RAND, or only RAND and N1, or only RAND and N2.

MAC and XRES1 are generated in different manners, such that an obtained value of MAC is different from an obtained value of XRES1. For example, if the same function f is used for calculating MAC and XRES1, parameters introduced may be different. For another example, if parameters introduced for calculating MAC and XRES1 are identical, different functions f may be used.

There may be a plurality of functions f. For example, the function f may be any one of functions f1 to f5 defined by 3GPP. For another example, the function f may be the KDF (for example, HMAC-SHA256). For another example, the function f may be another lightweight function (for example, ASCON).

If N2 is a random number selected by the authentication network element, AK may be used to protect N2, for example, N2 may be encrypted by using AK.

The authentication network element may generate the second expected response XRES2, where XRES2 is used by the service domain network to authenticate the first device. XRES2 may be determined according to a formula: XRES2 = $f_K$(XRES1, SN name).

The authentication network element may generate the third expected response XRES3, where XRES3 is used by the base station to authenticate the first device. XRES3 may be determined according to a formula: XRES3 = $f_{N1}$(XRES1).

The authentication network element may generate the authentication vector. The authentication vector may include a plurality of parameters generated and/or selected by the authentication network element. For example, the authentication vector may include one or more of the following: RAND, N2, AK, MAC, XRES1, XRES2, or XRES3. If N2 is selected by the authentication network element, the authentication vector may include N2. If N2 is shared between the first device and the authentication network element, the authentication vector may not include N2.

In some embodiments, the authentication vector may be: AV = RAND$\|$ N2 $\oplus$ AK$\|$MAC$\|$XRES1$\|$XRES2$\|$XRES3. In some other embodiments, the authentication vector may be: AV = RAND$\|$ AK$\|$MAC$\|$XRES1$\|$XRES2$\|$XRES3.

In some embodiments, the authentication vector may further include one or more of the following parameters: the IDi, the UE ID, or the SN name.

In step S1110, the authentication network element transmits an authentication response to the service domain network element. The authentication response includes the authentication vector AV. In some embodiments, the authentication response may further include the IDi.

In step S1112, after receiving the authentication vector, the service domain network element may store XRES2 in the authentication vector.

In step S1114, the service domain network element transmits an authentication request (or an authentication response) to the base station. The authentication request includes the authentication vector. In some embodiments, the authentication vector may not include XRES2. In some embodiments, the authentication response may further include the IDi.

In step S1116, if the authentication vector includes XRES3, the base station stores XRES3. If the authentication vector does not include XRES3, the base station may generate XRES3 based on XRES1.

In step S1118, the base station transmits the authentication request to the first device via the proxy node. The authentication request may include RAND and MAC. Alternatively, the authentication request may include RAND and N2 $\oplus$ AK$\|$MAC. If N2 is a random number selected by the authentication network element, AK may be used to protect security of N2.

In step S1120, after receiving the authentication request, the first device may check MAC. After the check is successful, the first device may calculate the first response parameter RES1, the second response parameter RES2, and the third response parameter RES3. In addition, the first device may further generate a key Ks. The key Ks may be determined according to the following formula: Ks=$f_{AK}$(N1,N2,UE ID,IDi,SN name).

In step S1122, the first device transmits an authentication response to the base station via the proxy node. The authentication response includes RES1, RES2, and RES3.

In step S1124, the base station compares RES3 with XRES3 to authenticate the first device. If RES3 matches XRES3, the first device is successfully authenticated. The base station considers, from the perspective of an access network, that the first device is successfully authenticated.

In step S1126, after the first device is successfully authenticated, the base station transmits an authentication response to the service domain network element. The authentication response includes RES2 and RES1.

In step S1128, after receiving the authentication response, the service domain network element may obtain RES2 from the authentication response. The service domain network element compares RES2 with XRES2 to authenticate the first device. After the authentication is successful, the service domain network element considers, from the perspective of the service domain network, that the first device is successfully authenticated.

In step S1130, the service domain network element transmits an authentication request (or an authentication response) to the authentication network element, where the authentication request includes RES1.

In step S1132, the authentication network element compares RES1 with XRES1 to authenticate the first device. After the authentication is successful, the authentication network element considers, from the perspective of the home domain network, that the first device is successfully authenticated.

The authentication network element may further generate a key Ks. The key Ks may be determined according to the following formula: Ks = $f_{AK}$(N1,N2,UE ID,IDi,SN name).

In step S1134, the authentication network element transmits a response message to the proxy node or the authentication network element transmits a response message to the service domain network element. In some embodiments, the authentication network element may transmit the response message to the proxy node by using the service domain network element and the base station.

In some embodiments, the authentication response may include the key Ks. The key Ks may be used by the proxy node to generate an integrity protection key and/or an encryption key.

FIG. 12 shows a procedure of generating the AKMA key after initial authentication (or lightweight initial authentication) is completed.

Referring to FIG. 12, in step S1202, the authentication network element generates the keys Ks, A-KID, and AKMA key. The first device generates the keys Ks, A-KID, and AKMA key.

In some embodiments, the authentication network element may generate the A-TID based on the key Ks. In an example, the A-TID may be generated based on Ks and the IDi. For example, the A-TID may be determined according to a formula: A-TID=$f_{Ks}$(IDi).

In some embodiments, the authentication network element may generate the A-KID based on the A-TID. In an example, the A-KID may be generated based on the A-TID, the RID, and the HNI. For example, the A-TID may be determined according to the formula: A-KID = A-TID‖RID‖HNI.

In some embodiments, the authentication network element may generate the AKMA key (denoted as $K_{AKMA}$). The AKMA key may be generated based on Ks. In this case, a function of Ks is the same as a function of $K_{AUSF}$ in the related technology. In an example, the AKMA key may be generated based on Ks, the IDi, and the AKMA. For example, the AKMA key may be determined according to the formula: $K_{AKMA}$ = $f_{Ks}$ ("AKMA", "IDi").

In step S1204, the authentication network element may transmit a registration request to the AAnF or the KMS, where the registration request may include one or more of the following information: the AKMA key, the A-KID, or the identifier IDi of the first device. The registration request may be, for example, an AKMA anchor key registration request (such as a Naanf_AKMA_Anchor-Key_Register Request).

Similarly, in step S1202, the first device may generate the keys Ks, the A-KID, and the AKMA key. A manner in which the first device generates the A-KID is similar to a manner in which the authentication network element generates the A-KID, and a manner in which the first device generates the AKMA key is similar to a manner in which the authentication network element generates the AKMA key. For brevity, details are not described herein again.

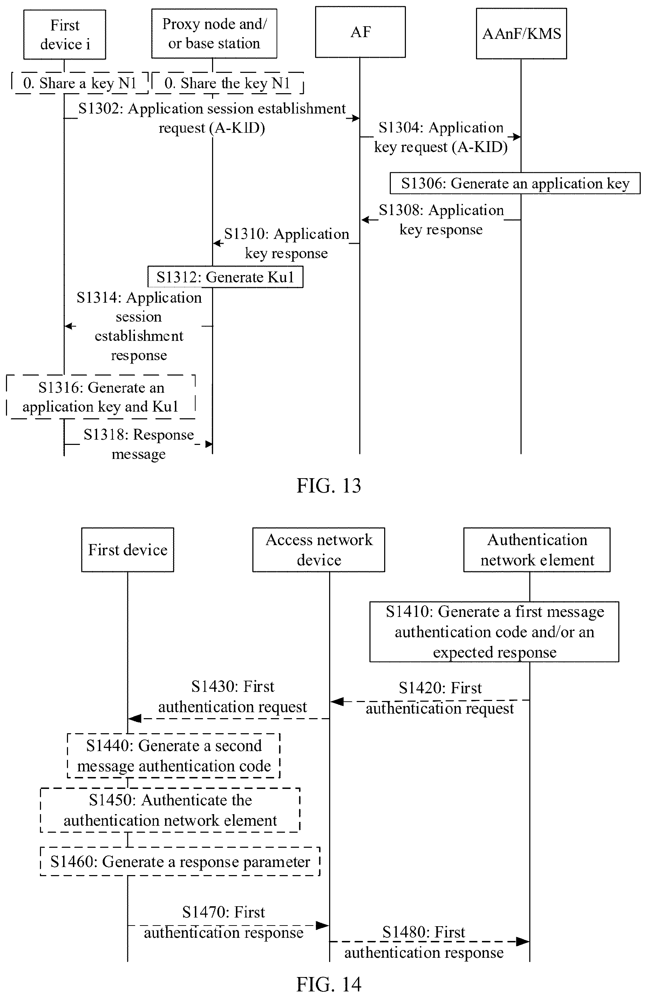

FIG. 13 shows a procedure of generating the application key.

Referring to FIG. 13, in step S1302, the first device transmits an application session establishment request to the AF. The application session establishment request may include the A-KID. The application session establishment request may alternatively be another communication request.

In some embodiments, the application session establishment request may include the UE ID and the DIDi. The UE ID may be, for example, the GPSI. The UE ID is the identifier of the proxy node.

In step S1304, after receiving the application session establishment request, the AF transmits an application key request to the AAnF or the KMS. The application key request may include the A-KID. In some embodiments, the application key request may further include the UE ID and the DIDi.

In step S1306, after receiving the application key request, the AAnF or the KMS may generate the application key based on the A-KID.

In some embodiments, the application key $K_{AF}$ may be generated based on Ks, the AF ID, the IDi, the UE ID, and the A-KID. For example, the application key $K_{AF}$ may be determined according to a formula: $K_{AF} = f_{Ks}(AF\ ID, IDi, UE\ ID, A\text{-}KID)$.

In step S1308, the AAnF or the KMS transmits an application key response to the AF. The application key response includes $K_{AF}$ and an expiration time of validity of $K_{AF}$.

The AAnF or the KMS may store $K_{AF}$ and the expiration time of validity of $K_{AF}$, so as to facilitate mobility management of the first device.

In step S1310, the AF transmits the application key response to the proxy node. The application key response includes $K_{AF}$ and an expiration time of validity of $K_{AF}$.

In step S1312, the proxy node generates a key Ku1. The key Ku1 may be generated based on $K_{AF}$. In an example, Ku1 may be generated based on $K_{AF}$ and N1. For example, Ku1 may be determined according to the formula: $Ku1 = K_{AF} \oplus N1$. N1 is a shared key between the first device and the proxy node.

In step S1314, the proxy node transmits an application session establishment response to the first device.

In step S1316, the first device generates the application key $K_{AF}$ and the key Ku1. A manner in which the first device generates $K_{AF}$ is similar to a manner in which the AAnF or the KMS generates $K_{AF}$, and a manner in which the first device generates the key Ku1 is similar to a manner in which the proxy node generates the key Ku1. For brevity, details are not described herein again.

In step S1318, the first device may transmit a response message to the proxy node.

The key Ku1 may be used to generate an integrity protection key and/or an encryption key, and the integrity protection key and/or the encryption key may be used to ensure secure communication between the first device and the proxy node. Then, if the first device uses another device (for example, the UEx) as the proxy node, a lower-level key Kux may be generated by using a shared key Nx between the first device and the UEx and $K_{AF}$. Kux may be used to further generate an integrity protection key and/or an encryption key. In this way, when there is a change in the proxy node, the first device is not necessarily required to perform an authentication and key agreement procedure of the first device, thereby reducing complexity of the first device.

**Example 2**

In the solution of Example 2, the security credential is a 3GPP security credential, and the first device is not required to communicate with the network side via the proxy node, that is, the first device may directly communicate with the network side.

Example 2 differs from Example 1 in that: 1. No proxy node participates. 2. The authentication information does not include information about the proxy node (such as the identifier of the proxy node or the UE ID).

The solution of Example 2 is basically similar to the solution of Example 1. For content not described in detail in Example 2, reference may be made to the description in Example 1.

FIG. 14 is a schematic flowchart of an authentication method according to an embodiment of this application. Referring to FIG. 14, in step S1410, the authentication network element generates a first message authentication code and/or an expected response. For a manner of generating the first message authentication code and the expected response, reference may be made to the description in Example 1.

In step S1420, the authentication network element transmits a first authentication request to an access network device. The first authentication request may include the first message authentication code.

The authentication network element transmitting the first authentication request to the access network device may refer to that the authentication network element directly transmits the first authentication request to the access network device, or may refer to that the authentication network element transmits the first authentication request to the access network device via another device. The another device may include, for example, a service domain network element. The service domain network element may include, for example, an AMF and/or an SMF.

In step S1430, the access network device transmits the first authentication request to the first device.

In step S1440, the first device generates a second message authentication code based on a first key generation algorithm and a second parameter.

In step S1450, the first device authenticates the authentication network element based on the first message authentication code and the second message authentication code.

In step S1460, the first device generates a response parameter in a case in which the authentication network element is successfully authenticated.

In step S1470, the first device transmits a first authentication response to the access network device. The first authentication response includes the response parameter.

In step S1480, the access network device transmits the first authentication response to the authentication network element. The first authentication response includes the response parameter.

In some embodiments, the access network device may transmit the response parameter to the authentication network element. After receiving the response parameter, the authentication network element may compare the response parameter with the expected response, to authenticate the first device.

In some embodiments, before receiving the first authentication request from the access network device, the first device may transmit a second authentication request to the access network device. In other words, the first device may transmit the second authentication request to trigger an authentication procedure between the first device and the network side.

In some embodiments, the second authentication request may include a concealed identifier of the first device. To ensure information security, the first device may anonymize the identifier of the first device to obtain the concealed identifier.

After receiving the second authentication request, the access network device may transmit the second authentication request to the authentication network element. The second authentication request transmitted by the access network device may include one or more of the following information: the first key, the identifier of the first device, or the concealed identifier.

In some embodiments, the access network device may use different processing policies depending on different first keys. In an example, if the first key is a shared key between the first device and the network side, the second authentication request transmitted by the access network device may include the concealed identifier.

In another example, if the first key is a shared key between the first device and the access network device, the access network device may de-anonymize the concealed identifier to obtain the identifier of the first device. For example, the access network device may determine the identifier of the first device based on the first key and the concealed identifier.

If the concealed identifier is generated by performing an exclusive OR operation on the first key and the identifier of the first device, the access network device may determine the identifier of the first device according to the following formula:

$$IDi = DIDi \oplus N1$$

DIDi denotes the concealed identifier, IDi denotes the identifier of the first device, N1 denotes the first key, and $\oplus$ denotes the exclusive OR operation.

If the concealed identifier is generated based on the first key, the identifier of the first device, and the third key generation algorithm, the access network device may determine the identifier of the first device according to the following formula:

$$IDi = f_{N1}(DIDi)$$

DIDi denotes the concealed identifier, IDi denotes the identifier of the first device, N1 denotes the first key, and f denotes the third key generation algorithm.

After the identifier of the first device is obtained, the second authentication request transmitted by the first device may include one or more of the following: the first key, or the identifier of the first device.

A second key Ks may be generated after authentication between the first device and the authentication network element is completed. The second key may also be understood as a shared key between the first device and the authentication network element. The second key may be generated based on a sixth key generation algorithm and a sixth parameter. The sixth key generation algorithm may be the first key generation algorithm or the second key generation algorithm, so as to reduce computing complexity of the first device. The sixth parameter may include one or more of the following parameters: the first anonymous key, the first key, the first random number, the identifier of the first device, or the service domain network name.

For example, the second key may be determined according to the following formula:

$$Ks = f_{AK}(N1, N2, IDi, SN\ name)$$

Ks denotes the second key, AK denotes the first anonymous key, N1 denotes the first key, N2 denotes the first random number, IDi denotes the identifier of the first device, SN name denotes the service domain network name, and f denotes the sixth key generation algorithm.

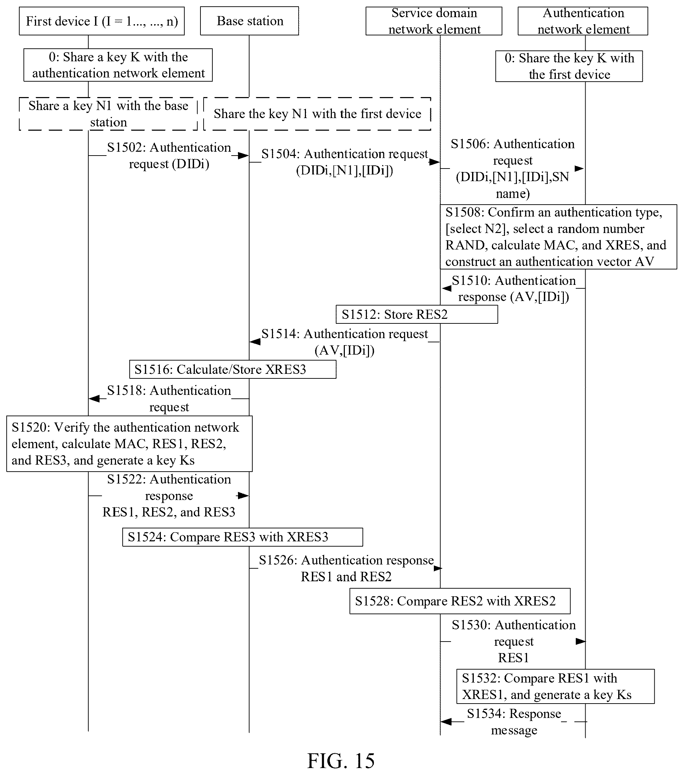

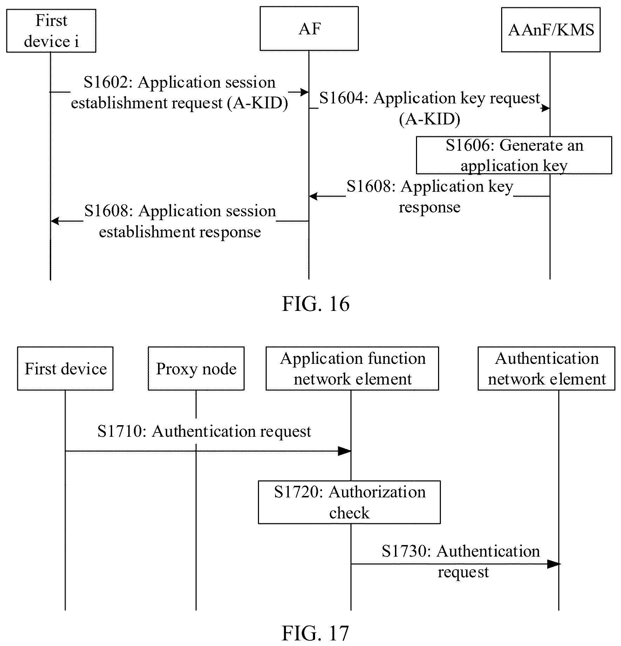

With reference to FIG. 15 and FIG. 16, the following describes in detail an authentication and key agreement procedure in which no proxy node participates.

FIG. 15 shows a procedure of performing authentication between the first device and the authentication network element. The first device may share the key K with the authentication network element, where the key K is the security credential described above. The first device may share the key N1 with the base station, where the key N1 is the first key described above. The key N1 may be a physical layer key.

The method shown in FIG. 15 is basically similar to the method shown in FIG. 11. For content not described in detail in FIG. 15, reference may be made to the description in FIG. 11.

Referring to FIG. 15, in step S1502, the first device transmits an authentication request to the base station. The authentication request may include the concealed identifier DIDi of the first device. The concealed identifier DIDi may be generated based on the identifier IDi of the first device.

In step S1504, the base station transmits the authentication request to the service domain network element.

In some embodiments, the authentication request may include the DIDi. For example, if N1 is a shared key between the first device and the authentication network element, the authentication request may include the DIDi.

In some embodiments, if N1 is a shared key between the first device and the base station, the base station may de-anonymize the DIDi based on N1, to obtain the identifier IDi of the first device. The authentication request transmitted by the base station may include one or more of the following: the IDi, or N1.

In step S1506, the service domain network element transmits the authentication request to the authentication network element, and the authentication request may include the service domain network name (SN name). In some embodiments, the authentication request may further include the DIDi. Alternatively, the authentication request may include the IDi and N1.

In step S1508, the authentication network element may confirm the authentication type.

In some embodiments, if the authentication request received by the authentication network element includes the DIDi, the authentication network element may de-anonymize the DIDi to obtain the IDi.

In some embodiments, the authentication network element may generate the first anonymous key AK, the first message authentication code, the first expected response, the second expected response, and the third expected response.

In some embodiments, the authentication network element may generate an authentication vector. The authentication vector may include a plurality of parameters generated and/or selected by the authentication network element. For example, the authentication vector may include one or more of the following: RAND, N2, AK, MAC, XRES1, XRES2, or XRES3. If N2 is selected by the authentication network element, the authentication vector may include N2. If N2 is shared between the first device and the authentication network element, the authentication vector may not include N2.

In some embodiments, the authentication vector may be: AV = RAND∥ N2 ⊕ AK∥MAC∥XRES1∥XRES2∥XRES3. In some other embodiments, the authentication vector may be: AV = RAND∥ AK∥MAC∥XRES1∥XRES2∥XRES3.

In some embodiments, the authentication vector may further include one or more of the following parameters: the IDi, the UE ID, or the SN name.

In step S1510, the authentication network element transmits an authentication response to the service domain network element. The authentication response includes the authentication vector AV.

In step S1512, after receiving the authentication vector, the service domain network element may store XRES2 in the authentication vector.

In step S1514, the service domain network element transmits an authentication request (or an authentication response) to the base station. The authentication request includes the authentication vector. In some embodiments, the authentication vector may not include XRES2.

In step S1516, if the authentication vector includes XRES3, the base station stores XRES3. If the authentication vector does not include XRES3, the base station may generate XRES3 based on XRES1.

In step S1518, the base station transmits the authentication request to the first device. The authentication request may include RAND and MAC. Alternatively, the authentication request may include RAND and N2 ⊕ AK∥MAC. If N2 is a random number selected by the authentication network element, AK may be used to protect security of N2.

In step S1520, after receiving the authentication request, the first device may check MAC. After the check is successful, the first device may calculate the first response parameter RES1, the second response parameter RES2, and the third response parameter RES3. In addition, the first device may further generate a key Ks. The key Ks may be determined according to the following formula: $Ks = f_{AK}(N1,N2, IDi,SN\ name)$.

In step S1522, the first device transmits an authentication response to the base station. The authentication response includes RES1, RES2, and RES3.

In step S1524, the base station compares RES3 with XRES3 to authenticate the first device. If RES3 matches XRES3, the first device is successfully authenticated. The base station considers, from the perspective of an access network, that the first device is successfully authenticated.

In step S1526, after the first device is successfully authenticated, the base station transmits an authentication response to the service domain network element. The authentication response includes RES2 and RES1.

In step S1528, after receiving the authentication response, the service domain network element may obtain RES2 from the authentication response. The service domain network element compares RES2 with XRES2 to authenticate the first device. After the authentication is successful, the service domain network element considers, from the perspective of the service domain network, that the first device is successfully authenticated.

In step S1530, the service domain network element transmits an authentication request (or an authentication response) to the authentication network element, where the authentication request includes RES1.

In step S1532, the authentication network element compares RES1 with XRES1 to authenticate the first device. After the authentication is successful, the authentication network element considers, from the perspective of the home domain network, that the first device is successfully authenticated.

The authentication network element may further generate a key Ks. The key Ks may be determined according to the following formula: $Ks = f_{AK}(N1,N2, IDi,SN\ name)$.

In step S1534, the authentication network element may transmit a response message to the service domain network element.

After obtaining the key Ks, the authentication network element and the first device may generate the AKMA key according to the method shown in FIG. 12. In addition, the authentication network element may transmit a registration request to the AAnF or the KMS, and the registration request may include one or more of the following information: the AKMA key, the A-KID, or the identifier IDi of the first device.

FIG. 16 shows a procedure of generating the application key.

Referring to FIG. 16, in step S1602, the first device transmits an application session establishment request to the AF. The application session establishment request may include the A-KID. The application session establishment request may alternatively be another communication request. In some embodiments, the application session establishment request may include the DIDi.

In step S1604, after receiving the application session establishment request, the AF transmits an application key request to the AAnF or the KMS. The application key request may include the A-KID. In some embodiments, the application key request may further include the DIDi.

In step S1606, after receiving the application key request, the AAnF or the KMS may generate the application key based on the A-KID.

In some embodiments, the application key $K_{AF}$ may be generated based on Ks, the AF ID, the IDi, and the A-KID. For example, the application key $K_{AF}$ may be determined according to the formula: $K_{AF} = f_{Ks}(AF\ ID, IDi, A\text{-}KID)$.

In step S1608, the AAnF or the KMS transmits an application key response to the AF. The application key response includes $K_{AF}$ and an expiration time of validity of $K_{AF}$.

The AAnF or the KMS may store $K_{AF}$ and the expiration time of validity of $K_{AF}$, so as to facilitate mobility management of the first device.

In step S1610, the AF transmits an application session establishment response to the first device.

Then, the first device and the AF may establish a secure connection (such as a TLS connection) with each other based on $K_{AF}$.

**Example 3**

In the solution of Example 3, the security credential is a non-3GPP security credential. For example, the security credential is a shared key between the first device and an application function network element, and the first device communicates with the network side via the proxy node.

FIG. 17 is a schematic flowchart of an authentication method according to an embodiment of this application. Referring to FIG. 17, in step S1710, the first device transmits an authentication request to the application function network element. In some embodiments, the first device may transmit the authentication request to the application function network element via the proxy node.

The authentication request may include one or more of the following informaton: the concealed identifier of the first device, the identifier of the first device, the identifier of the proxy node, or the first key. In some embodiments, the authentication request may include the concealed identifier of the first device and the identifier of the proxy node. In some other embodiments, the authentication request may include the identifier of the first device, the identifier of the proxy node, and the first key.

In step S1720, the application function network element performs an authorization check on the first device and/or the proxy node. For example, the application function network element may check whether the first device is authorized to use a service (for example, an A-IoT service). For another example, the application function network element may check whether the proxy node is authorized to provide a service (for example, an A-IoT service) for the first device as a proxy.

In some embodiments, the application function network element may manage a mapping between a whitelist of the first device and the proxy node.

When performing an authorization check on the first device, the application function network element may perform the authorization check on the first device based on the identifier IDi of the first device. When performing an authorization check on the proxy node, the application function network element may perform the authorization check on the proxy node based on the identifier (for example, the UE ID) of the proxy node.

The identifier of the first device and the identifier of the proxy node may be transmitted by the proxy node to the application function network element.

In some embodiments, the first device may transmit an authentication request to the proxy node, and the authentication request may include the concealed identifier DIDi of the first device. The proxy node may de-anonymize the concealed identifier DIDi to obtain the identifier of the first device.

The proxy node may transmit an authentication request to the application function network element, and the authentication request may include the identifier IDi of the first device and the identifier of the proxy node. To ensure information security, the proxy node may transmit the authentication request by using a NAS security context or an AS security context.

In step S1730, the application function network element transmits the authentication request to the authentication network element in a case in which the authorization check on the first device and/or the proxy node is successful.

If the authorization check on the first device and/or the proxy node is failed, the application function network element may not transmit the authentication request to the authentication network element, that is, does not perform a subsequent authentication and key agreement procedure.

In embodiments of this application, the application function network element may first perform an authorization check on the first device and the proxy node, and then perform a subsequent authentication and key agreement procedure in a case in which the authorization check is successful, which is conducive to reducing computing complexity of the first device. For example, if the authorization check is performed after the authentication and key agreement procedure is completed, a failure of the authorization check makes the authentication and key agreement procedure of the first device be invalid, which causes a waste of resources, and is not conducive to reducing computing complexity of the first device.

In some embodiments, the concealed identifier may be generated based on the first key N1. The first key may be a shared key between the first device and the application function network element, or the first key may be a shared key (such as a physical layer key) between the first device and the proxy node.

If the first key is a shared key between the first device and the proxy node, the proxy node may de-anonymize the concealed identifier based on the first key, to obtain the identifier of the first device. If the first key is a shared key between the first device and the application function network element, the application function network element may de-anonymize the concealed identifier to obtain the identifier of the first device.

For example, the identifier IDi of the first device may be determined according to the formula: $IDi = DIDi \oplus N1$; or the formula: $IDi = f_{N1}(DIDi)$.

If the first key is a shared key between the first device and the proxy node, the authentication request transmitted by the proxy node to the application function network element may include the identifier of the first device, the identifier of the proxy node, and the first key. If the first key is a shared key between the first device and the application function network element, the authentication request transmitted by the proxy node to the application function network element may include the concealed identifier of the first device and the identifier of the proxy node.

In some embodiments, the application function network element may transmit a security credential K to the authentication network element, or the application function network element may transmit a lower-level key (denoted as Kb) of a security credential K to the authentication network element. The lower-level key is a key generated based on the security credential K. The authentication network element may determine the security credential K based on the lower-level key.

The lower-level key may be generated based on one or more of the security credential K, the first key (denoted as N1), or the first random number (denoted as N2). For example, the lower-level key Kb may be generated according to a formula: $Kb = K \oplus N1$; or a formula: $Kb = K \oplus N2$. N2 may be a shared key between the first device and the AF, or N2 may be a random number selected by the AF.

If the authentication network element receives the security credential K, the authentication network element may generate a parameter required in the authentication process based on the security credential K. The parameter may be, for example, a parameter included in an authentication vector. The parameter may include, for example, one or more of the following: a first anonymous key, a first message authentication code, an expected response, or a key Ks. The key Ks is a shared key generated after the authentication between the first device and the authentication network element is successful.

In some embodiments, the first anonymous key may be generated based on the security credential K and a target parameter. The target parameter may include RAND and/or N1. For example, the first anonymous key AK may be determined according to the formula: $AK = f_K(RAND)$; or the formula: $AK = K \oplus N1$.

In some embodiments, the first message authentication code may be generated based on the security credential K and a target parameter. The target parameter may include one or more of the following: RAND, N1, or N2. For example, the target parameter includes RAND. For another example, the target parameter includes RAND and N1. For another example, the target parameter includes RAND and N2. For another example, the target parameter includes RAND, N1, and N2.

For example, the first message authentication code may be determined according to one or more of the following formulas: $MAC = f_K(RAND,N1,N2)$, $MAC = f_K(RAND,N1)$, $MAC = f_K(RAND,N2)$, or $MAC = f_K(RAND)$.

In some embodiments, the expected response may be generated based on the security credential K and a target parameter. The target parameter may include one or more of the following: RAND, N1, or N2. For example, the target parameter includes RAND. For another example, the target parameter includes RAND and N1. For another example, the target parameter includes RAND and N2. For another example, the target parameter includes RAND, N1, and N2.

For example, the expected response may be determined according to one or more of the following formulas: $XRES = f_K(RAND,N1,N2)$, $XRES = f_K(RAND,N1)$, $XRES = f_K(RAND,N2)$, or $XRES = f_K(RAND)$.

The key Ks may be generated based on the security credential K and a target parameter. The target parameter may include one or more of the following: AK, N1, N2, IDi, UE ID, AF ID, HNI, or SN name. For example, the target parameter may include AK, N1, N2, IDi, UE ID, AF ID, and HNI. For another example, the target parameter may include AK, N1, N2, IDi, UE ID, AF ID, and SN name.

For example, the key Ks may be determined according to a formula: $Ks = f_{AK}(N1,N2,IDi, UE\ ID, AF\ ID,HNI)$; or a formula: $Ks = f_{AK}(N1,N2,IDi, UE\ ID, AF\ ID, SN\ name)$.

If the authentication network element receives the key Kb, the authentication network element may generate, based on the key Kb, a parameter required in the authentication process. The parameter may be, for example, a parameter included in an authentication vector. The parameter may include, for example, one or more of the following: the first message authentication code, the expected response, or the key Ks.

The first message authentication code may be generated based on the key Kb and a target parameter. The target parameter may include one or more of the following: RAND, N1, or N2. For example, the target parameter includes RAND. For another example, the target parameter includes RAND and N1. For another example, the target parameter includes RAND and N2. For another example, the target parameter includes RAND, N1, and N2.

For example, the first message authentication code may be determined according to one or more of the following formulas: $MAC = f_{Kb}(RAND,N1,N2)$, $MAC = f_{Kb}(RAND,N1)$, $MAC = f_{Kb}(RAND,N2)$, or $MAC = f_{Kb}(RAND)$.

In some embodiments, the expected response may be generated based on the security credential K and a target parameter. The target parameter may include one or more of the following: RAND, N1, or N2. For example, the target parameter includes RAND. For another example, the target parameter includes RAND and N1. For another example, the target parameter includes RAND and N2. For another example, the target parameter includes RAND, N1, and N2.

For example, the expected response may be determined according to one or more of the following formulas: $XRES = f_{Kb}(RAND,N1,N2)$, $XRES = f_{Kb}(RAND,N1)$, $XRES = f_{Kb}(RAND,N2)$, or $XRES = f_{Kb}(RAND)$.

The key Ks may be generated based on the security credential K and a target parameter. The target parameter may include one or more of the following: AK, N1, N2, IDi, UE ID, AF ID, HNI, or SN name. For example, the target parameter may include AK, N1, N2, IDi, UE ID, AF ID, and HNI. For another example, the target parameter may include AK, N1, N2, IDi, UE ID, AF ID, and SN name.

For example, the key Ks may be determined according to a formula: $Ks = f_{Kb}(N1,N2,IDi, UE ID, AF ID,HNI)$; or a formula: $Ks = f_{Kb}(N1,N2,IDi, UE ID, AF ID, SN name)$.

In some embodiments, the first device may generate one or more of the following parameters in a manner the same as a manner used by the authentication network element: the first anonymous key, the second message authentication code, a response parameter, or the key Ks. For example, a manner of generating the second message authentication code is the same as a manner of generating the first message authentication code. For another example, a manner of generating the response parameter is the same as a manner of generating the expected response.

In some embodiments, the expected response may include the first expected response, the second expected response, and the third expected response. A manner of generating the first expected response may be a manner of generating the expected response described above. The second expected response and the third expected response may be generated based on the first expected response. For a specific generation manner, reference may be made to description in another example.

In some embodiments, the response parameter may include the first response parameter, the second response parameter, and the third response parameter. A manner of generating the first response parameter may be a manner of generating the response parameter in the foregoing description. The second response parameter and the third response parameter may be generated based on the first response parameter. For a specific generation manner, reference may be made to description in another example.

The f in the foregoing formulas may be a same key generation algorithm, or f in the foregoing formulas may be the first key generation algorithm or the second key generation algorithm. For example, the first key generation algorithm is used to generate the first message authentication code or the second message authentication code, and the second key generation algorithm is used to generate the expected response or the response parameter.

After Ks is obtained, the first device and the authentication network element may generate one or more of the A-TID, the A-KID, or the AKMA key based on Ks. For a specific generation manner, reference may be made to description in another example in the foregoing description.

Since the application function network element participates in the authentication and key agreement procedure, the application function network element may directly receive the application key transmitted by the AAnF. For example, after generating the application key, the AAnF may directly transmit the application key to the AF, rather than being triggered by the AF by transmitting an application key request.

After receiving the application key, the AF may transmit the application key to the proxy node. The application key may be used by the proxy node to generate a third key (for example, Ku1).

For a manner of generating the application key by the AAnF and a manner of generating the third key by the proxy node, reference may be made to the foregoing description. Details are not described herein again.

For the authentication and key agreement procedure between the first device and the network side involved in the solution shown in FIG. 17 may be similar to the solution in the foregoing description. For content not described in detail, reference may be made to the foregoing description. For brevity, details are not described herein again.

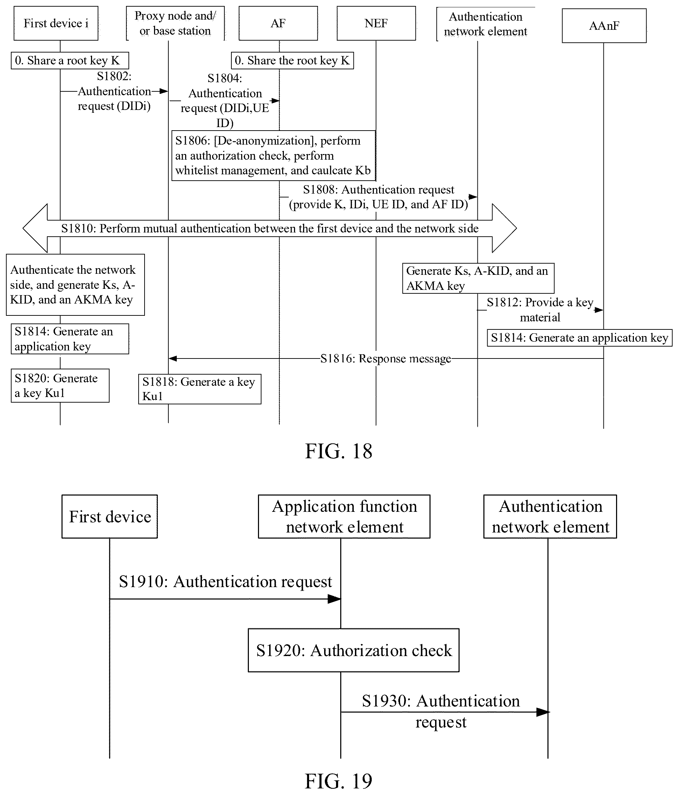

With reference to FIG. 18, the following describes in detail an authentication and key agreement procedure in which the proxy node participates. In the solution shown in FIG. 18, the first device may share a key K with the AF.

Referring to FIG. 18, in step S1802, the first device transmits an authentication request to the proxy node. The authentication request includes the concealed identifier DIDi of the first device. The concealed identifier DIDi may be generated based on the identifier IDi of the first device.

There are two manners of generating the concealed identifier DIDi. If N1 is a key (or a random number) pre-shared between the first device and the AF, the DIDi may be determined according to the following formula: DIDi = IDi⊕N1. After the security context of the first device is established, the AF may transmit a new first key to the first device to update the DIDi.

If N1 is a shared key (for example, a physical layer key) between the first device and the proxy node, the DIDi may be determined according to the formula: DIDi = IDi ⊕ N1; or DIDi = $f_{N1}$(IDi).

In step S1804, the proxy node transmits the authentication request to the AF.

In some embodiments, the authentication request may include the DIDi and the identifier of the proxy node. For example, if N1 is a shared key between the first device and the AF, the authentication request may include the DIDi and the identifier of the proxy node.

In some embodiments, if N1 is a shared key between the first device and the proxy node, the proxy node may de-anonymize the DIDi based on N1, to obtain the identifier IDi of the first device. The authentication request transmitted by the proxy node may include one or more of the following: the IDi, the identifier of the proxy node, or N1.

The identifier of the proxy node may include one or more of the GPSI, the SUCI, or the GUTI.

To ensure information security, the proxy node may transmit the authentication request by using a NAS message. For example, the proxy node may transmit the authentication request by using a NAS security context.

In step S1806, the AF may perform authorization management.

In some embodiments, if N1 is a shared key between the first device and the AF, the AF may perform de-anonymization based on N1, to obtain the identifier IDi of the first device. For example, the IDi may be determined according to the formula: IDi = DIDi⊕N1; or the formula: IDi = $f_{N1}$(DIDi).

In some embodiments, the AF may check whether the first device is authorized. In some embodiments, the AF may check whether the proxy node is authorized to provide a service (for example, an A-IoT service) for the first device. In some embodiments, the AF may further check a mapping relationship between the first device and the proxy node. The AF may manage a mapping between a whitelist of the first device and a proxy node list.

In some embodiments, if the authentication request received by the AF includes the IDi, the identifier of the proxy node, and N1, the AF may directly perform an authorization check, and manage a mapping between the first device and the proxy node.

In step S1808, the AF transmits the authentication request to the authentication network element. The authentication request may include a security credential K or a lower-level key Kb derived from a security credential K. In some embodiments, the authentication request may further include one or more of the following information: the IDi, the UE ID, or the AF ID.

In some embodiments, the authentication request may include one or more of the following: K, K∥N1, K∥N1∥N2, or K∥N2. N1 may be a shared key between the first device and the proxy node, or N1 may be a shared key between the first device and the AF. N2 may be a shared key between the first device and the AF, or N2 may be a random number selected by the AF.

In some embodiments, the authentication request may include one or more of the following: Kb, Kb∥N2, or Kb∥N1.

If Kb is generated based on K and N1, the authentication request may include Kb∥N2. If Kb is generated based on K and N2, the authentication request may include Kb∥N1.

In some embodiments, the authentication request may include indentification capable of indicating an authentication type. The indentification of the authentication type may be indicated by using one or more of the following: the AF ID, a type of the IDi, or an authentication type identifier (Auth_type_ID).

In step S1810, authentication (such as AKA authentication) is performed between the first device and the authentication network element. For the authentication mode, reference may be made to the foregoing description, for example, the description in FIG. 11.

The proxy node may forward an authentication message between the first device and the authentication network element.

The authentication network element may query subscription credentials of the first device and the proxy node by using a core network element (such as the UDM). The core network element may check, based on the IDi and the identifier of the proxy node, the subscription credentials of the first device and the proxy node, so as to determine whether the first device is authorized to use A-IoT services.

The authentication network element may determine the authentication type based on the indentification capable of indicating the authentication type, for example, determine whether the authentication type is A-IoT authentication.

The authentication network element generates an authentication vector. The authentication network element may select a random number RAND, where the random number RAND may be used to generate the authentication vector.

If the authentication request received by the authentication network element includes one or more of K, K∥N1, K∥N1∥N2, or K∥N2, the authentication network element may generate an authentication parameter based on K and RAND. The authentication parameter includes one or more of the following: the first anonymous key AK, the first message authentication code MAC, an expected response XRES, or an authentication vector AV.

The first anonymous key AK may be determined according to the formula: $AK = f_K(RAND)$; or the formula: $AK = K \oplus N1$.

The first message authentication code MAC may be determined according to the formula: $MAC = f_K(RAND,N1,N2)$.

The expected response XRES may be determined according to the formula: $XRES = f_K(RAND,N1,N2)$.

The authentication vector may be $AV = RAND\|AK\|MAC\| XRES$.

A same function f and different parameters may be used for calculating MAC and XRES. Alternatively, a same parameter and different functions f may be used for calculating MAC and XRES.

If the authentication request received by the authentication network element includes one or more of Kb, Kb‖N1, or Kb‖N2, the authentication network element may generate an authentication parameter based on Kb and RAND. The authentication parameter includes one or more of the following: the first message authentication code MAC, an expected response XRES, or an authentication vector AV.

The first message authentication code MAC may be determined according to one or more of the following formulas: $MAC = f_{Kb}(RAND,N1,N2)$, $MAC = f_{Kb}(RAND)$, $MAC = f_{Kb}(RAND,N1)$, or $MAC = f_{Kb}(RAND,N2)$.

The expected response XRES may be determined according to one or more of the following formulas: $XRES = f_{Kb}(RAND,N1,N2)$, $XRES = f_{Kb}(RAND)$, $XRES = f_{Kb}(RAND,N1)$, or $XRES = f_{Kb}(RAND,N2)$.

The authentication vector may be $AV = RAND\|MAC\| XRES$.

A same function f and different parameters may be used for calculating MAC and XRES. Alternatively, a same parameter and different functions f may be used for calculating MAC and XRES.

In some embodiments, the authentication network element may transmit an authentication response to the first device via the proxy node. The authentication response may include RAND and the first message authentication code. In some embodiments, if N2 is a random number selected by the AF, the authentication response may further include $AK \oplus N2$ or $Kb \oplus N2$, where AK and Kb are used to protect N2, so as to ensure secure transmission of N2. In some embodiments, the authentication response may include the AF ID and the IDi.

The first device may calculate the second message authentication code, and compare the first message authentication code with the second message authentication code, to authenticate the authentication network element. After the authentication is successful, the first device may generate the key Ks. The key Ks may be determined according to one or more of the following formulas: $Ks = f_{AK}(N1,N2,IDi, UE\ ID, AF\ ID, SN\ name)$, $Ks = f_{AK}(N1,N2,IDi, UE\ ID, AF\ ID, HNI)$, $Ks = f_{Kb}(N1,N2,IDi, UE\ ID, AF\ ID, SN\ name)$, or $Ks = f_{Kb}(N1,N2,IDi, UE\ ID, AF\ ID, HNI)$.

In some embodiments, the first device may generate the A-TID. The A-TID may be determined according to the formula: $A\text{-}TID = f_{Ks}(ID1)$. In some embodiments, the first device may generate the A-KID. The A-KID may be determined according to the formula: $A\text{-}KID = A\text{-}TID\|RID\|HNI$. In some embodiments, the first device may generate the AKMA key, and the AKMA key may be determined according to the formula: $K_{AKMA} = f_{Ks}("AKMA", "IDi")$.

In some embodiments, the first device may generate the response parameter RES, and a calculation manner of the RES is the same as a calculation manner of the XRES.

The first device may transmit the authentication response to the authentication network element via the proxy node, and the authentication response may include the response parameter RES. The authentication network element may compare RES with XRES to authenticate the first device. If RES matches XRES, the first device is successfully authenticated. If RES does not match XRES, the first device fails to be authenticated. After the first device is successfully authenticated, the authentication network element may generate one or more of the following parameters: Ks, the A-TID, the A-KID, or the AKMA key. A manner in which the authentication network element generates these parameters is the same as a manner in which the first device generates corresponding parameters.

In step S1812, the authentication network element provides a key material to the AAnF, and the key material may include the AKMA key and the A-KID.

In step S1814, the AAnF generates the application key $K_{AF}$ based on the AKMA key. The application key $K_{AF}$ may be determined according to a formula: $K_{AF} = f_{KAKMA}(AF\ ID, IDi, UE\ ID)$.

In step S1816, the AAnF transmits a response message to the AF and/or the proxy node. The message may be a successful response message. The response message may include the application key and/or an expiration time of validity of the application key. In some embodiments, the response message may further include a newly selected first key (or a random number), and the new first key may be used to update the concealed identifier.

In step S1818, the proxy node generates a key Ku1.

In step S1820, the first device generates the key Ku1.

The key Ku1 may be generated based on the application key. For a specific generation manner, reference may be made to the foregoing description.

In some embodiments, the proxy node may transmit the response message to the first device. The response message includes one or more of the following information: the A-KID, the expiration time of validity of the application key, the newly selected first key, or a message integrity check code (message integrity check, MIC). The response message may be protected by using a key, such as an integrity protection and/or an encryption protection. The key may include one or more of the following: $K_{AF}$, Ku1, a lower-level key derived from $K_{AF}$, or a lower-level key derived from Ku1.

The shared key N1 between the first device and the proxy node may be used for mobility management. For example, the first device and the proxy node may generate the key Ku1 based on N1 and $K_{AF}$, and then generate an integrity protection key and/or an encryption key based on Ku1. Then, if the first device uses another device (for example, the UEx) as the proxy node, a lower-level key Kux may be generated by using a shared key Nx between the first device and the UEx and $K_{AF}$. Kux may be used to further generate an integrity protection key and/or an encryption key. In this way, when there is a change in the proxy node, the first device is not necessarily required to perform an authentication and key agreement procedure of the first device, thereby reducing complexity of the first device.

Certainly, in some embodiments, the authentication network element may alternatively generate XRES1, XRES2, and XRES3 in a manner described in the foregoing description, and the first device may generate RES1, RES2, and RES3 in a manner described in the foregoing description.

**Example 4**

In the solution of Example 4, the security credential is a non-3GPP security credential. For example, the security credential is a shared key between the first device and an application function network element, and the first device directly communicates with the network side.

FIG. 19 is a schematic flowchart of an authentication method according to an embodiment of this application. Referring to FIG. 19, in step S1910, the first device transmits an authentication request to the application function network element.

The authentication request may include one or more of the following information: the concealed identifier of the first device, the identifier of the first device, or the first key. In some embodiments, the authentication request may include the concealed identifier of the first device. In some other embodiments, the authentication request may include the identifier of the first device and the first key.

In some embodiments, the concealed identifier may be generated based on the first key N1. The first key may be a shared key between the first device and the application function network element.

In step S1920, the application function network element performs an authorization check on the first device. For example, the application function network element may check whether the first device is authorized to use a service (for example, an A-IoT service).

In some embodiments, the application function network element may manage a whitelist of the first device.

When performing an authorization check on the first device, the application function network element may perform the authorization check on the first device based on the identifier IDi of the first device. In some embodiments, the authentication request may include the concealed identifier DIDi of the first device. The application function network element may de-anonymize the concealed identifier DIDi to obtain the identifier of the first device. For example, the application function network element may de-anonymize the concealed identifier DIDi based on the first key N1, to obtain the identifier of the first device. For example, the identifier IDi of the first device may be determined according to the formula: IDi = DIDi $\oplus$ N1; or the formula: IDi = $f_{N1}$(DIDi).

In step S1930, the application function network element transmits the authentication request to the authentication network element in a case in which the authorization check on the first device is successful.

If the authorization check on the first device is failed, the application function network element may not transmit the authentication request to the authentication network element, that is, does not perform a subsequent authentication and key agreement procedure.

In embodiments of this application, the application function network element may first perform an authorization check on the first device, and then perform a subsequent authentication and key agreement procedure in a case in which the authorization check is successful, which is conducive to reducing computing complexity of the first device. For example, if the authorization check is performed after the authentication and key agreement procedure is completed, a failure of the authorization check makes the authentication and key agreement procedure of the first device be invalid, which causes a waste of resources, and is not conducive to reducing computing complexity of the first device.

In some embodiments, the application function network element may transmit a security credential K to the authentication network element, or the application function network element may transmit a lower-level key (denoted as Kb) of a security credential K to the authentication network element. The lower-level key is a key generated based on the security credential K. The authentication network element may determine the security credential K based on the lower-level key.

The lower-level key may be generated based on one or more of the security credential K, the first key (denoted as N1), or the first random number (denoted as N2). For example, the lower-level key Kb may be generated according to a formula: Kb = K $\oplus$ N1; or a formula: Kb = K $\oplus$ N2. N2 may be a shared key between the first device and the AF, or N2 may be a random number selected by the AF.

If the authentication network element receives the security credential K, the authentication network element may generate a parameter required in the authentication process based on the security credential K. The parameter may be, for example, a parameter included in an authentication vector. The parameter may include, for example, one or more of the following: the first anonymous key, the first message authentication code, an expected response, or a key Ks. The key Ks is a shared key generated after the authentication between the first device and the authentication network element is successful. For a specific generation manner of these parameters, reference may be made to the description in Example 3. For brevity, details are not described herein again.

If the authentication network element receives the key Kb, the authentication network element may generate, based on the key Kb, a parameter required in the authentication process. The parameter may be, for example, a parameter included in an authentication vector. The parameter may include, for example, one or more of the following: the first message authentication code, the expected response, or the key Ks. For a specific generation manner of these parameters, reference may be made to the description in Example 3. For brevity, details are not described herein again.

In some embodiments, the first device may generate one or more of the following parameters in a manner the same as a manner used by the authentication network element: the first anonymous key, the second message authentication code, a response parameter, or the key Ks. For example, a manner of generating the second message authentication code is the same as a manner of generating the first message authentication code. For another example, a manner of generating the response parameter is the same as a manner of generating the expected response.

In some embodiments, the expected response may include the first expected response, the second expected response, and the third expected response. A manner of generating the first expected response may be a manner of generating the expected response described above. The second expected response and the third expected response may be generated based on the first expected response. For a specific generation manner, reference may be made to description in another example.

In some embodiments, the response parameter may include the first response parameter, the second response parameter, and the third response parameter. A manner of generating the first response parameter may be a manner of generating the response parameter in the foregoing description. The second response parameter and the third response parameter may be generated based on the first response parameter. For a specific generation manner, reference may be made to description in another example.

The f in the foregoing formulas may be a same key generation algorithm, or f in the foregoing formulas may be the first key generation algorithm or the second key generation algorithm. For example, the first key generation algorithm is used to generate the first message authentication code or the second message authentication code, and the second key generation algorithm is used to generate the expected response or the response parameter.

After Ks is obtained, the first device and the authentication network element may generate one or more of the A-TID, the A-KID, or the AKMA key based on Ks. For a specific generation manner, reference may be made to description in another example in the foregoing description.

Since the application function network element participates in the authentication and key agreement procedure, the application function network element may directly receive the application key transmitted by the AAnF. For example, after generating the application key, the AAnF may directly transmit the application key to the AF, rather than being triggered by the AF by transmitting an application key request.

After receiving the application key, the AF may transmit the application key to the proxy node. The application key may be used by the proxy node to generate a third key (for example, Ku1).

For a manner of generating the application key by the AAnF and a manner of generating the third key by the proxy node, reference may be made to the foregoing description. Details are not described herein again.

For the authentication and key agreement procedure between the first device and the network side involved in the solution shown in FIG. 19 may be similar to the solution in the foregoing description. For content not described in detail, reference may be made to the foregoing description. For brevity, details are not described herein again.

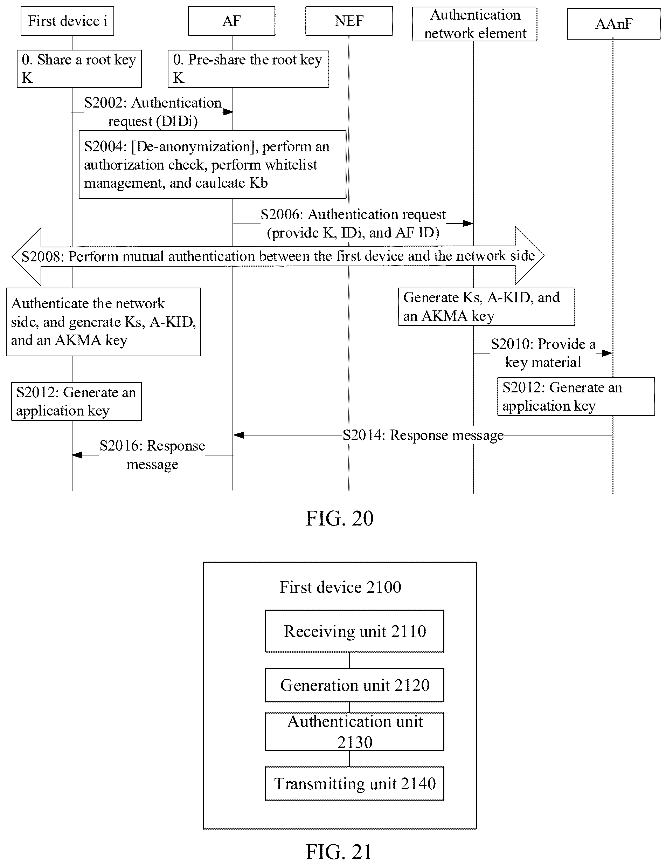

With reference to FIG. 20, the following describes in detail an authentication and key agreement procedure in which no proxy node participates. In the solution shown in FIG. 20, the first device may share a key K with the AF.

Referring to FIG. 20, in step S2002, the first device transmits an authentication request to the AF. The authentication request includes the concealed identifier DIDi of the first device. The concealed identifier DIDi may be generated based on the identifier IDi of the first device.

If N1 is a key (or a random number) pre-shared between the first device and the AF, the DIDi may be determined according to the following formula: DIDi = IDi⊕N1. After the security context of the first device is established, the AF may transmit a new first key to the first device to update the DIDi.

In step S2004, the AF may perform authorization management.

In some embodiments, if N1 is a shared key between the first device and the AF, the AF may perform de-anonymization based on N1, to obtain the identifier IDi of the first device. For example, the IDi may be determined according to the formula: IDi = DIDi$\oplus$N1; or the formula: IDi = $f_{N1}$(DIDi).

In some embodiments, the AF may check whether the first device is authorized. In some embodiments, the AF may further manage a whitelist of the first device.

In step S2006, the AF transmits the authentication request to the authentication network element. The authentication request may include a security credential K or a lower-level key Kb derived from a security credential K. In some embodiments, the authentication request may further include the AF ID and the IDi.

In some embodiments, the authentication request may include one or more of the following: K, K∥N1, K∥N1∥N2, or K∥N2. N1 may be a shared key between the first device and the proxy node, or N1 may be a shared key between the first device and the AF. N2 may be a shared key between the first device and the AF, or N2 may be a random number selected by the AF.

In some embodiments, the authentication request may include one or more of the following: Kb, Kb∥N2, or Kb∥N1.

If Kb is generated based on K and N1, the authentication request may include Kb∥N2. If Kb is generated based on K and N2, the authentication request may include Kb∥N1.

In some embodiments, the authentication request may include indentification capable of indicating an authentication type. The indientification of the authentication type may be indicated by using one or more of the following: the AF ID, a type of the IDi, or an authentication type identifier (Auth_type_ID).

In step S2008, authentication (such as AKA authentication) is performed between the first device and the authentication network element. For the authentication mode, reference may be made to the foregoing description, for example, the description in FIG. 11.

The authentication network element may query subscription credentials of the first device and the proxy node by using a core network element (such as the UDM). The core network element may check, based on the IDi and the identifier of the proxy node, the subscription credentials of the first device and the proxy node, so as to determine whether the first device is authorized to use A-IoT services.

The authentication network element may determine the authentication type based on the indentification capable of indicating the authentication type, for example, determine whether the authentication type is A-IoT authentication.

The authentication network element generates an authentication vector. The authentication network element may select a random number RAND, where the random number RAND may be used to generate the authentication vector.

If the authentication request received by the authentication network element includes one or more of K, K∥N1, K∥N1∥N2, or K∥N2, the authentication network element may generate an authentication parameter based on K and RAND. The authentication parameter includes one or more of the following: the first anonymous key AK, the first message authentication code MAC, an expected response XRES, or an authentication vector AV.

The first anonymous key AK may be determined according to the formula: AK = $f_K$(RAND); or the formula: AK = K $\oplus$ N1.

The first message authentication code MAC may be determined according to the formula: MAC = $f_K$(RAND,N1,N2).

The expected response XRES may be determined according to the formula: XRES = $f_K$(RAND,N1,N2).

The authentication vector may be AV = RAND∥AK∥MAC∥ XRES.

A same function f and different parameters may be used for calculating MAC and XRES. Alternatively, a same parameter and different functions f may be used for calculating MAC and XRES.

If the authentication request received by the authentication network element includes one or more of Kb, Kb∥N1, or Kb∥N2, the authentication network element may generate an authentication parameter based on Kb and RAND. The authentication parameter includes one or more of the following: the first message authentication code MAC, an expected response XRES, or an authentication vector AV.

The first message authentication code MAC may be determined according to one or more of the following formulas: MAC = $f_{Kb}$(RAND,N1,N2), MAC = $f_{Kb}$(RAND), MAC = $f_{Kb}$(RAND,N1), or MAC = $f_{Kb}$(RAND,N2).

The expected response XRES may be determined according to one or more of the following formulas: XRES = $f_{Kb}$(RAND,N1,N2), XRES = $f_{Kb}$(RAND), XRES = $f_{Kb}$(RAND,N1), or XRES = $f_{Kb}$(RAND,N2).

The authentication vector may be AV = RAND∥MAC∥ XRES.

A same function f and different parameters may be used for calculating MAC and XRES. Alternatively, a same parameter and different functions f may be used for calculating MAC and XRES.

In some embodiments, the authentication network element may transmit an authentication response to the first device via the proxy node. The authentication response may include RAND and the first message authentication code. In some embodiments, if N2 is a random number selected by the AF, the authentication response may further include AK $\oplus$ N2 or Kb $\oplus$ N2, where AK and Kb are used to protect N2, so as to ensure secure transmission of N2. In some embodiments, the authentication response may include the AF ID and the IDi.

The first device may calculate the second message authentication code, and compare the first message authentication code with the second message authentication code, to authenticate the authentication network element. After the authentication is successful, the first device may generate the key Ks. The key Ks may be determined according to one or more of the following formulas: $Ks = f_{AK}(N1,N2,IDi, UE\ ID, AF\ ID, SN\ name)$, $Ks = f_{AK}(N1,N2,IDi, UE\ ID, AF\ ID, HNI)$, $Ks = f_{Kb}(N1,N2,IDi, UE\ ID, AF\ ID, SN\ name)$, or $Ks = f_{Kb}(N1,N2,IDi, UE\ ID, AF\ ID, HNI)$.

In some embodiments, the first device may generate the A-TID. The A-TID may be determined according to the formula: $A\text{-}TID = f_{Ks}(IDi)$. In some embodiments, the first device may generate the A-KID. The A-KID may be determined according to the formula: $A\text{-}KID = A\text{-}TID||RID||HNI$. In some embodiments, the first device may generate the AKMA key, and the AKMA key may be determined according to the formula: $K_{AKMA} = f_{Ks}("AKMA", "IDi")$.

In some embodiments, the first device may generate the response parameter RES, and a calculation manner of the RES is the same as a calculation manner of the XRES.

The first device may transmit the authentication response to the authentication network element via the proxy node, and the authentication response may include the response parameter RES. The authentication network element may compare RES with XRES to authenticate the first device. If RES matches XRES, the first device is successfully authenticated. If RES does not match XRES, the first device fails to be authenticated. After the first device is successfully authenticated, the authentication network element may generate one or more of the following parameters: Ks, the A-TID, the A-KID, or the AKMA key. A manner in which the authentication network element generates these parameters is the same as a manner in which the first device generates corresponding parameters.

In step S2010, the authentication network element provides a key material to the AAnF, and the key material may include the AKMA key and the A-KID.

In step S2012, the AAnF generates the application key $K_{AF}$ based on the AKMA key. The application key $K_{AF}$ may be determined according to a formula: $K_{AF} = f_{KAKMA}(AF\ ID, IDi, UE\ ID)$. Similarly, the first device generates the application key $K_{AF}$ based on the AKMA key.

In step S2014, the AAnF transmits a response message to the AF. The response message may be a successful response message. The response message includes the application key and/or an expiration time of validity of the application key. In some embodiments, the response message may further include a newly selected first key (or a random number), and the new first key may be used to update the concealed identifier.

In step S2016, the AF transmits a response message to the first device. The response message includes one or more of the following information: the A-KID, the expiration time of validity of the application key, the newly selected first key, or a message integrity check code (message integrity check, MIC). The response message may be protected by using a key, such as an integrity protection key and/or an encryption protection key. The key may include one or more of the following: $K_{AF}$, Ku1, a lower-level key derived from $K_{AF}$, or a lower-level key derived from Ku1.

The solutions described below are applicable to all the foregoing four examples.

In some embodiments, to reduce a quantity of times of key derivation, the authentication network element may transmit Ks to the proxy node, such that the proxy node protects, based on Ks, information transmitted over the air interface. For example, the proxy node may generate an integrity protection key and/or an encryption key based on Ks, and at least one of the integrity protection key or the encryption key is used for secure communication between the first device and the proxy node.

In some embodiments, to reduce a quantity of times of key derivation, the authentication network element may transmit Ks to the AF, and the AF and the first device may establish a secure connection (such as a transport layer security (transport layer security, TLS) connection) with each other based on Ks, to protect information transmitted over the air interface.

In some embodiments, for a solution in which the proxy node participates, before authentication and key agreement between the first device and the network side is triggered, mutual authentication between the first device and the proxy node may be performed, so as to prevent a malicious first device from initiating a distributed denial of service (distributed denial of service, DDOS) attack on a network via the proxy node, which affects network quality, or prevent a malicious proxy node from initiating a man-in-the-middle attack, and stealing communication data between the first device and a network, or between the first device and a third-party application, or prevent authentication signalling of the first device being carried on a malicious proxy node, which reults in failed authentication and key agreement.

The authentication mode between the first device and the proxy node may include one or more of the following: pairing, activating the first device by the proxy node, a physical unclonable function (physical unclonable function, PUF), or physical layer authentication.

After the authentication is successful, the proxy node may protect an authentication message of the first device by using a security context of the proxy node. For example, after receiving an authentication request or a response message from the first device, the proxy node may transmit an authentication container (for example, a Tag_authentication_container) of the first device by using a NAS security context or an AS security context of the first device, so as to interact with the network side.

The information transmission between the AF and the authentication network element described above may be implemented by using a network exposure function (network exposure function, NEF). For example, the NEF may forward a transmission message between the AF and the authentication network element.

The foregoing security credential may also be referred to as a key, a root key, or the like.

According to the foregoing solution, secure transmission between the first device and the proxy node is protected based on the application key. In some embodiments, to reduce a quantity of times of key derivation, secure transmission between the first device and the proxy node may be directly protected by using the key Ks. That is, the key Ks is equivalent to the key $K_{AF}$ in functions. For example, the authentication network element may transmit the key Ks to the proxy node, and the proxy node may generate an integrity protection key and/or an encryption key based on the key Ks. Similarly, the first device may also generate an integrity protection key and/or an encryption key based on the key Ks.

In some embodiments, the key Ks may be used to generate a NAS security context and/or an AS security context. For example, the authentication network element may generate $K_{AMF}$ based on Ks and provide $K_{AMF}$ to the AMF. In this case, Ks is equivalent to $K_{AUSF}$ in functions. The AMF may generate a NAS security context based on $K_{AMF}$. For another example, the authentication network element may provide Ks to the AMF. In this case, Ks is equivalent to $K_{AMF}$ in functions. The AMF may generate a NAS security context based on Ks. The NAS security context may include, for example, Knas-int and Knas-enc.

For another example, the authentication network element may generate Kgnb based on Ks and provide Kgnb to a base station. In this case, Ks is equivalent to $K_{AUSF}$ in functions. The base station may generate an AS security context based on Kgnb. For another example, the authentication network element may provide Ks to the base station. In this case, Ks is equivalent to Kgnb in functions. The base station may generate an AS security context based on Ks.

In some embodiments, a relay mode of the proxy node may include L2 relay and L3 relay. That is, when the proxy node is used for relay communication, a protocol stack used for the relay may belong to layer L2 or L3. For L2 relay, there is a separate context between the first device and the core network. There is a hop by hop (hop by hop) and an end-to-end (end-to-end) secure connection between the first device and the network. For L3 relay, the first device is only required to implement a secure connection to the proxy node.

For L3 relay, a security context may include a security context between the first device and the proxy node. For L2 relay, a security context includes a security context, a NAS security context, and an AS security context between the first device and the proxy node.

The function f in the foregoing formula may be any one of functions f1 to f5 defined by 3GPP. Alternatively, the function f may be the KDF (for example, HMAC-SHA256). Alternatively, the function f may be another lightweight function (for example, ASCON).

The home domain network element or authentication network element in the foregoing description may include one or more of the following network elements: a UDM, an AUSF, a KMS, or an ARPF. The service domain network element in the foregoing description may include one or more of the following: an AMF, an SMF, an SEAF, or a core network element A-NF that is specific to a nA-IoT service.

If the proxy node in the foregoing description is a terminal device, the identifier of the proxy node may be represented by using a UE ID.

The first key N1 in the foregoing description has three purposes. First, it may be used to protect the identifier of the first device. Second, it may be used to calculate the authentication vector and the shared key Ks. Third, it may be used for mobility management, that is, generating Ku1.

It should be noted that, in embodiments of this application, a length of a generated key is not limited, and may be any length. Values such as a number FC and a parameter length may be introduced in the key generation process, and the embodiments of this application do not impose specific limitations on these values.

The method embodiments of this application are described above in detail with reference to FIG. 1 to FIG. 20. Apparatus embodiments of this application are described below in detail with reference to FIG. 21 to FIG. 25. It should be understood that the description of the method embodiment corresponds to the description of the apparatus embodiment. Therefore, for a part that is not described in detail, reference may be made to the foregoing method embodiment.

FIG. 21 is a schematic block diagram of a first device according to an embodiment of this application. The first device 2100 shown in FIG. 21 may be any first device described above. The first device 2100 may include a receiving unit 2110, a generation unit 2120, an authentication unit 2130, and a transmitting unit 2140. The following describes these units in detail.

The receiving unit 2110 is configured to receive a first authentication request from a proxy node, where the first authentication request includes a first message authentication code, and the first message authentication code is generated by an authentication network element.

The generation unit 2120 is configured to generate a second message authentication code based on a first key generation algorithm and a first parameter.

The authentication unit 2130 is configured to authenticate the authentication network element based on the first message authentication code and the second message authentication code.

The generation unit 2120 is further configured to generate, by the first device, a response parameter in a case in which the authentication network element is successfully authenticated.

The transmitting unit 2140 is configured to transmit a first authentication response to the proxy node, where the first authentication response includes the response parameter, and the response parameter is used to authenticate the first device.

In some implementations, the response parameter includes a first response parameter, the first response parameter is used by a home domain network element to authenticate the first device, and the generation unit is configured to generate the first response parameter based on the first key generation algorithm and a second parameter.

In some implementations, the response parameter includes a first response parameter, the first response parameter is used by a home domain network element to authenticate the first device, and the generation unit is configured to generate the first response parameter based on a second key generation algorithm and the first parameter.

In some implementations, the response parameter includes a second response parameter, the second response parameter is used by a service domain network element to authenticate the first device, and the generation unit is configured to generate the second response parameter based on the first response parameter and a third parameter.

In some implementations, the response parameter includes a third response parameter, the third response parameter is used by an access network device to authenticate the first device, and the generation unit is configured to generate the third response parameter based on the first response parameter and a fourth parameter.

In some implementations, the generation unit is further configured to perform, before receiving the first authentication request from the proxy node, an exclusive OR operation on an identifier of the first device and a first key to generate a concealed identifier of the first device; and the transmitting unit is further configured to transmit a second authentication request to the proxy node, where the second authentication request includes the concealed identifier.

In some implementations, the generation unit is further configured to generate a concealed identifier of the first device based on an identifier of the first device, a first key, and a third key generation algorithm before receiving the first authentication request from the proxy node, where the third key generation algorithm is the first key generation algorithm or a second key generation algorithm. The transmitting unit is further configured to transmit a second authentication request to the proxy node, where the second authentication request includes the concealed identifier.

In some implementations, the first key is a shared key between the first device and the authentication network element, or the first key is a physical layer key between the first device and the proxy node.

In some implementations, the generation unit is further configured to generate a second key in a case in which the authentication network element is successfully authenticated; and generate a key for Authentication and Key Management for Applications based on the second key and a fourth key generation algorithm.

In some implementations, the transmitting unit is further configured to transmit an application session establishment request message to the proxy node. The receiving unit is further configured to receive an application session establishment response message from the proxy node. The generation unit is further configured to: generate an application key based on the key for Authentication and Key Management for Applications in response to receiving the application session establishment response message; and generate a third key based on the application key, a first key, and a fifth key generation algorithm, where the first key is a physical layer key between the first device and the proxy node, and the fifth key generation algorithm is the first key generation algorithm or a second key generation algorithm. The device further includes a communications unit, configured to perform secure communication with the proxy node based on the third key.

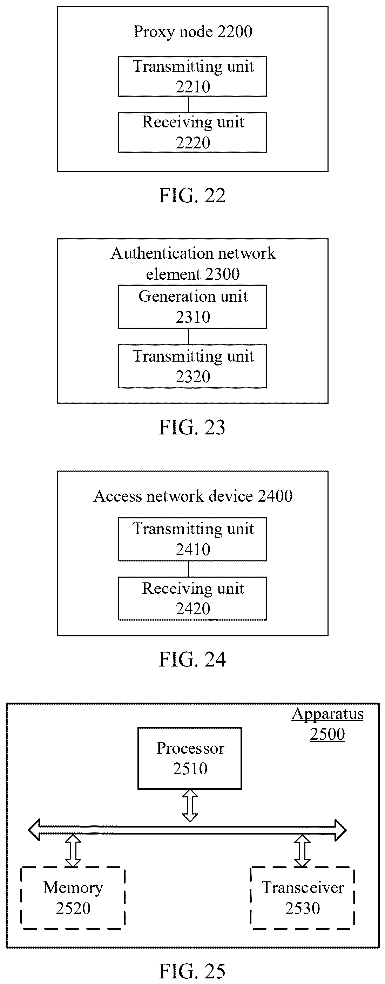

FIG. 22 is a schematic block diagram of a proxy node according to an embodiment of this application. The proxy node 2200 shown in FIG. 22 may be any proxy node described above. The proxy node 2200 may include a transmitting unit 2210 and a receiving unit 2220. The following describes these units in detail.

The transmitting unit 2210 is configured to transmit a first authentication request to a first device, where the first authentication request includes a first message authentication code, the first message authentication code is generated by an authentication network element, the first message authentication code and a second message authentication code are used to authenticate the authentication network element, the second message authentication code is generated by the first device, and the first message authentication code and the second message authentication code are generated based on a first key generation algorithm and a first parameter.

The receiving unit 2220 is configured to receive a first authentication response from the first device, where the first authentication response includes a response parameter, the response parameter is used to authenticate the first device, and the response parameter is generated in a case in which the authentication network element is successfully authenticated.

In some implementations, the response parameter includes a first response parameter, the first response parameter is used by a home domain network element to authenticate the first device, and the first response parameter is generated based on the first key generation algorithm and a second parameter.

In some implementations, the response parameter includes a first response parameter, the first response parameter is used by a home domain network element to authenticate the first device, and the first response parameter is generated based on a second key generation algorithm and the first parameter.

In some implementations, the response parameter includes a second response parameter, the second response parameter is used by a service domain network element to authenticate the first device, and the second response parameter is generated based on the first response parameter and a third parameter.

In some implementations, the response parameter includes a third response parameter, the third response parameter is used by an access network device to authenticate the first device, and the third response parameter is generated based on the first response parameter and a fourth parameter.

In some implementations, the receiving unit is further configured to receive a second authentication request from the first device before transmitting the first authentication request to the first device, where the second authentication request includes a concealed identifier of the first device, and the concealed identifier is generated by performing an exclusive OR operation on an identifier of the first device and a first key.

In some implementations, the receiving unit is further configured to receive a second authentication request from the first device before transmitting the first authentication request to the first device, where the second authentication request includes a concealed identifier of the first device, the concealed identifier is generated based on a concealed identifier of the first device, a first key, and a third key generation algorithm, and the third key generation algorithm is the first key generation algorithm or a second key generation algorithm.

In some implementations, the first key is a physical layer key between the first device and the proxy node, and the proxy node further includes a determining unit, configured to determine the identifier of the first device based on the first key and the concealed identifier. The transmitting unit is further configured to transmit the second authentication request to the authentication network element, where the second authentication request includes one or more of the following information: the first key, the identifier of the first device, or an identifier of the proxy node.

In some implementations, the first key is a shared key between the first device and the authentication network element; and the transmitting unit is further configured to transmit the second authentication request to the authentication network element, where the second authentication request includes one or more of the following information: the concealed identifier or an identifier of the proxy node.

In some implementations, the receiving unit is further configured to receive an application key from an application function network element; and the proxy node further includes: a generation unit, configured to generate a third key based on the application key, a first key, and a fifth key generation algorithm, where the first key is a physical layer key between the first device and the proxy node, and the fifth key generation algorithm is the first key generation algorithm or a second key generation algorithm; and a communications unit, configured to perform secure communication with the first device based on the third key.

FIG. 23 is a schematic block diagram of an authentication network element according to an embodiment of this application. The authentication network element 2300 shown in FIG. 23 may be any authentication network element described above. The authentication network element 2300 may include a generation unit 2310 and a transmitting unit 2320. The following describes these units in detail.

The generation unit 2310 is configured to generate a first message authentication code and an expected response, where the expected response is used to authenticate a first device, and the first message authentication code is generated based on a first key generation algorithm and a first parameter.

The transmitting unit 2320 is configured to transmit a first authentication request to a proxy node, where the first authentication request includes the first message authentication code, the first message authentication code and a second message authentication code are used to authenticate the authentication network element, and the second message authentication code is generated by the first device.

In some implementations, the expected response includes a first expected response, the first expected response is used by a home domain network element to authenticate the first device, and the generation unit is configured to generate the first expected response based on the first key generation algorithm and a second parameter.

In some implementations, the expected response includes a first expected response, the first expected response is used by a home domain network element to authenticate the first device, and the generation unit is configured to generate the first expected response based on a second key generation algorithm and the first parameter.

In some implementations, the expected response includes a second expected response, the second expected response is used by a service domain network element to authenticate the first device, and the generation unit is configured to generate the second expected response based on the first expected response and a third parameter.

In some implementations, the expected response includes a third expected response, the third expected response is used by an access network device to authenticate the first device, and the generation unit is configured to generate the third expected response based on the first expected response and a fourth parameter.

In some implementations, the authentication network element further includes: a receiving unit, configured to receive a second authentication request from the proxy node before the authentication network element generates the first message authentication code and the expected response, where the second authentication request includes a concealed identifier of the first device; and a determining unit, configured to determine an identifier of the first device based on the concealed identifier and a first key.

In some implementations, the first key is a shared key between the first device and the authentication network element, or the first key is a physical layer key between the first device and the proxy node.

In some implementations, the generation unit is further configured to generate a second key in a case in which the first device is successfully authenticated; and generate a key for Authentication and Key Management for Applications based on the second key and a fourth key generation algorithm.

In some implementations, the first parameter includes a first random number, and the first random number is selected by the authentication network element, or the first random number is pre-shared between the authentication network element and the first device.

FIG. 24 is a schematic block diagram of an access network device according to an embodiment of this application. The access network device 2400 shown in FIG. 24 may be any access network device described above. The access network device 2400 may include a transmitting unit 2410 and a receiving unit 2420. The following describes these units in detail.

The transmitting unit 2410 is configured to transmit a first authentication request to a first device, where the first authentication request includes a first message authentication code, the first message authentication code is generated by an authentication network element, the first message authentication code and a second message authentication code are used to authenticate the authentication network element, the second message authentication code is generated by the first device, and the first message authentication code and the second message authentication code are generated based on a first key generation algorithm and a first parameter.

The receiving unit 2420 is configured to receive a first authentication response from the first device, where the first authentication response includes a response parameter, the response parameter is used to authenticate the first device, and the response parameter is generated in a case in which the authentication network element is successfully authenticated.

In some implementations, the response parameter includes a first response parameter, the first response parameter is used by a home domain network element to authenticate the first device, and the first response parameter is generated based on the first key generation algorithm and a second parameter.

In some implementations, the response parameter includes a first response parameter, the first response parameter is used by a home domain network element to authenticate the first device, and the first response parameter is generated based on a second key generation algorithm and the first parameter.

In some implementations, the response parameter includes a second response parameter, the second response parameter is used by a service domain network element to authenticate the first device, and the second response parameter is generated based on the first response parameter and a third parameter.

In some implementations, the response parameter includes a third response parameter, the third response parameter is used by an access network device to authenticate the first device, and the third response parameter is generated based on the first response parameter and a fourth parameter.

In some implementations, the receiving unit is further configured to receive a second authentication request from the first device before the access network device transmits the first authentication request to the first device, where the second authentication request includes a concealed identifier of the first device, and the concealed identifier is generated by performing an exclusive OR operation on an identifier of the first device and a first key.

In some implementations, the receiving unit is further configured to receive a second authentication request from the first device before the access network device transmits the first authentication request to the first device, where the second authentication request includes a concealed identifier of the first device, the concealed identifier is generated based on a concealed identifier of the first device, a first key, and a third key generation algorithm, and the third key generation algorithm is the first key generation algorithm or a second key generation algorithm.

In some implementations, the first key is a physical layer key between the first device and the access network device, and the access network device further includes a determining unit, configured to determine the identifier of the first device based on the first key and the concealed identifier. The transmitting unit is further configured to transmit the second authentication request to the authentication network element, where the second authentication request includes one or more of the following information: the first key, or the identifier of the first device.

In some implementations, the first key is a shared key between the first device and the authentication network element; and the transmitting unit is further configured to transmit the second authentication request to the authentication network element, where the second authentication request includes the concealed identifier.

In some implementations, the first authentication response includes a third response parameter, the receiving unit is further configured to receive a second authentication response from the authentication network element, and the second authentication response includes a third expected response. The access network device further includes a comparison unit, configured to compare the third response parameter with the third authentication response to authenticate the first device.

FIG. 25 is a schematic structural diagram of a communications apparatus according to an embodiment of this application. Dashed lines in FIG. 25 indicate that a unit or module is optional. The apparatus 2500 may be configured to implement the method described in the foregoing method embodiments. The apparatus 2500 may be a chip, a first device, a proxy node, an authentication network element, an access network device, or an application function network element.

The apparatus 2500 may include one or more processors 2510. The processor 2510 may support the apparatus 2500 in implementing the methods described in the foregoing method embodiments. The processor 2510 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 2500 may further include one or more memories 2520. The memory 2520 stores a program that may be executed by the processor 2510 to cause the processor 2510 to perform the methods described in the foregoing method embodiments. The memory 2520 may be separated from or integrated into the processor 2510.

The apparatus 2500 may further include a transceiver 2530. The processor 2510 may communicate with another device or chip through the transceiver 2530. For example, the processor 2510 may transmit data to and receive data from another device or chip through the transceiver 2530.

An embodiment of this application further provides a computer-readable storage medium, configured to store a program. The computer-readable storage medium may be applied to the first device, the proxy node, the authentication network element, the access network device, or the application function network element provided in embodiments of this application, and the program causes a computer to perform the method executed by the first device, the proxy node, the authentication network element, the access network device, or the application function network element in various embodiments of this application.

An embodiment of this application further provides a computer program product. The computer program product includes a program. The computer program product may be applied to the first device, the proxy node, the authentication network element, the access network device, or the application function network element provided in embodiments of this application, and the program causes a computer to perform the method executed by the first device, the proxy node, the authentication network element, the access network device, or the application function network element in various embodiments of this application.

An embodiment of this application further provides a computer program. The computer program may be applied to the first device, the proxy node, the authentication network element, the access network device, or the application function network element provided in embodiments of this application, and the computer program causes a computer to perform the method executed by the first device, the proxy node, the authentication network element, the access network device, or the application function network element in various embodiments of this application.

It should be understood that, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order.

In the embodiments of this application, the "include" may refer to direct inclusion, or may refer to indirect inclusion. Optionally, the term "include" mentioned in the embodiments of this application may be replaced with "indicate" or "be used to". For example, A including B may be replaced with that A indicates B, or A is used to determine B.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. An authentication method, comprising:

   receiving, by a first device, a first authentication request from a proxy node, wherein the first authentication request comprises a first message authentication code, and the first message authentication code is generated by an authentication network element;
   generating, by the first device, a second message authentication code based on a first key generation algorithm and a first parameter;
   authenticating, by the first device, the authentication network element based on the first message authentication code and the second message authentication code;
   generating, by the first device, a response parameter in a case in which the authentication network element is successfully authenticated; and
   transmitting, by the first device, a first authentication response to the proxy node, wherein the first authentication response comprises the response parameter, and the response parameter is used to authenticate the first device.

2. The method according to claim 1, wherein the response parameter comprises a first response parameter, and the first response parameter is used by a home domain network element to authenticate the first device; and the generating, by the first device, the response parameter comprises:
   generating, by the first device, the first response parameter based on the first key generation algorithm and a second parameter.

3. The method according to claim 1, wherein the response parameter comprises a first response parameter, and the first response parameter is used by a home domain network element to authenticate the first device, and the generating, by the first device, the response parameter comprises:
   generating, by the first device, the first response parameter based on a second key generation algorithm and the first parameter.

4. The method according to claim 2 or 3, wherein the response parameter comprises a second response parameter, and the second response parameter is used by a service domain network element to authenticate the first device; and the generating, by the first device, the response parameter comprises:
   generating, by the first device, the second response parameter based on the first response parameter and a third parameter.

5. The method according to any one of claims 2 to 4, wherein the response parameter comprises a third response parameter, and the third response parameter is used by an access network device to authenticate the first device; and the generating, by the first device, the response parameter comprises:
   generating, by the first device, the third response parameter based on the first response parameter and a fourth parameter.

6. The method according to any one of claims 1 to 5, wherein before the receiving, by the first device, the first authentication request from the proxy node, the method further comprises:

   performing, by the first device, an exclusive OR operation on an identifier of the first device and a first key to generate a concealed identifier of the first device; and
   transmitting, by the first device, a second authentication request to the proxy node, wherein the second authentication request comprises the concealed identifier.

7. The method according to claim 1, wherein before the receiving, by the first device, the first authentication request from the proxy node, the method further comprises:

   generating, by the first device, a concealed identifier of the first device based on an identifier of the first device, a first key, and a third key generation algorithm, wherein the third key generation algorithm is the first key generation algorithm or a second key generation algorithm; and
   transmitting, by the first device, a second authentication request to the proxy node, wherein the second authentication request comprises the concealed identifier.

8. The method according to claim 6 or 7, wherein the first key is a shared key between the first device and the authentication network element, or the first key is a physical layer key between the first device and the proxy node.

9. The method according to any one of claims 1 to 8, further comprising:

   generating, by the first device, a second key in a case in which the authentication network element is successfully authenticated; and
generating, by the first device, a key for Authentication and Key Management for Applications based on the second key and a fourth key generation algorithm.

10. The method according to claim 9, further comprising:

transmitting, by the first device, an application session establishment request message to the proxy node;
receiving, by the first device, an application session establishment response message from the proxy node;
generating, by the first device, an application key based on the key for Authentication and Key Management for Applications in response to receiving the application session establishment response message;
generating, by the first device, a third key based on the application key, a first key, and a fifth key generation algorithm, wherein the first key is a physical layer key between the first device and the proxy node, and the fifth key generation algorithm is the first key generation algorithm or a second key generation algorithm; and
performing, by the first device, secure communication with the proxy node based on the third key.

11. An authentication method, comprising:

transmitting, by a proxy node, a first authentication request to a first device, wherein the first authentication request comprises a first message authentication code, the first message authentication code is generated by an authentication network element, the first message authentication code and a second message authentication code are used to authenticate the authentication network element, the second message authentication code is generated by the first device, and the first message authentication code and the second message authentication code are generated based on a first key generation algorithm and a first parameter; and
receiving, by the proxy node, a first authentication response from the first device, wherein the first authentication response comprises a response parameter, the response parameter is used to authenticate the first device, and the response parameter is generated in a case in which the authentication network element is successfully authenticated.

12. The method according to claim 11, wherein the response parameter comprises a first response parameter, the first response parameter is used by a home domain network element to authenticate the first device, and the first response parameter is generated based on the first key generation algorithm and a second parameter.

13. The method according to claim 11, wherein the response parameter comprises a first response parameter, the first response parameter is used by a home domain network element to authenticate the first device, and the first response parameter is generated based on a second key generation algorithm and the first parameter.

14. The method according to claim 12 or 13, wherein the response parameter comprises a second response parameter, the second response parameter is used by a service domain network element to authenticate the first device, and the second response parameter is generated based on the first response parameter and a third parameter.

15. The method according to any one of claims 12 to 14, wherein the response parameter comprises a third response parameter, the third response parameter is used by an access network device to authenticate the first device, and the third response parameter is generated based on the first response parameter and a fourth parameter.

16. The method according to any one of claims 11 to 15, wherein before the transmitting, by the proxy node, the first authentication request to the first device, the method further comprises:
receiving, by the proxy node, a second authentication request from the first device, wherein the second authentication request comprises a concealed identifier of the first device, and the concealed identifier is generated by performing an exclusive OR operation on an identifier of the first device and a first key.

17. The method according to any one of claims 11 to 15, wherein before the transmitting, by the proxy node, the first authentication request to the first device, the method further comprises:
receiving, by the proxy node, a second authentication request from the first device, wherein the second authentication request comprises a concealed identifier of the first device, the concealed identifier is generated based on a concealed identifier of the first device, a first key, and a third key generation algorithm, and the third key generation algorithm is the first key generation algorithm or a second key generation algorithm.

18. The method according to claim 16 or 17, wherein the first key is a physical layer key between the first device and the proxy node; and the method further comprises:

determining, by the proxy node, the identifier of the first device based on the first key and the concealed identifier; and

transmitting, by the proxy node, the second authentication request to the authentication network element, wherein the second authentication request comprises one or more of following information: the first key, the identifier of the first device, or an identifier of the proxy node.

19. The method according to claim 16 or 17, wherein the first key is a shared key between the first device and the authentication network element; and the method further comprises:
transmitting, by the proxy node, the second authentication request to the authentication network element, wherein the second authentication request comprises one or more of following information: the concealed identifier or an identifier of the proxy node.

20. The method according to any one of claims 11 to 19, further comprising:

receiving, by the proxy node, an application key from an application function network element; generating, by the proxy node, a third key based on the application key, a first key, and a fifth key generation algorithm, wherein the first key is a physical layer key between the first device and the proxy node, and the fifth key generation algorithm is the first key generation algorithm or a second key generation algorithm; and performing, by the proxy node, secure communication with the first device based on the third key.

21. An authentication method, comprising:

generating, by an authentication network element, a first message authentication code and an expected response, wherein the expected response is used to authenticate a first device, and the first message authentication code is generated based on a first key generation algorithm and a first parameter; and transmitting, by the authentication network element, a first authentication request to a proxy node, wherein the first authentication request comprises the first message authentication code, the first message authentication code and a second message authentication code are used to authenticate the authentication network element, and the second message authentication code is generated by the first device.

22. The method according to claim 21, wherein the expected response comprises a first expected response, and the first expected response is used by a home domain network element to authenticate the first device; and the generating, by the authentication network element, the expected response comprises:
generating, by the authentication network element, the first expected response based on the first key generation algorithm and a second parameter.

23. The method according to claim 21, wherein the expected response comprises a first expected response, and the first expected response is used by a home domain network element to authenticate the first device; and the generating, by the authentication network element, the expected response comprises:
generating, by the authentication network element, the first expected response based on a second key generation algorithm and the first parameter.

24. The method according to claim 22 or 23, wherein the expected response comprises a second expected response, and the second expected response is used by a service domain network element to authenticate the first device; and the method further comprises:
generating, by the authentication network element, the second expected response based on the first expected response and a third parameter.

25. The method according to any one of claims 22 to 24, wherein the expected response comprises a third expected response, and the third expected response is used by an access network device to authenticate the first device; and the method further comprises:
generating, by the authentication network element, the third expected response based on the first expected response and a fourth parameter.

26. The method according to any one of claims 21 to 25, wherein before the generating, by the authentication network element, the first message authentication code and the expected response, the method further comprises:

receiving, by the authentication network element, a second authentication request from the proxy node, wherein the second authentication request comprises a concealed identifier of the first device; and
determining, by the authentication network element, an identifier of the first device based on the concealed identifier and a first key.

27. The method according to claim 26, wherein the first key is a shared key between the first device and the authentication network element, or the first key is a physical layer key between the first device and the proxy node.

28. The method according to any one of claims 21 to 27, further comprising:

generating, by the authentication network element, a second key in a case in which the first device is successfully authenticated; and generating, by the authentication network element, a key for Authentication and Key Management for Applications based on the second key and a fourth key generation algorithm.

29. The method according to any one of claims 21 to 28, wherein the first parameter comprises a first random number, and the first random number is selected by the authentication network element, or the first random number is pre-shared between the authentication network element and the first device.

30. An authentication method, comprising:

transmitting, by an access network device, a first authentication request to a first device, wherein the first authentication request comprises a first message authentication code, the first message authentication code is generated by an authentication network element, the first message authentication code and a second message authentication code are used to authenticate the authentication network element, the second message authentication code is generated by the first device, and the first message authentication code and the second message authentication code are generated based on a first key generation algorithm and a first parameter; and receiving, by the access network device, a first authentication response from the first device, wherein the first authentication response comprises a response parameter, the response parameter is used to authenticate the first device, and the response parameter is generated in a case in which the authentication network element is successfully authenticated.

31. The method according to claim 30, wherein the response parameter comprises a first response parameter, the first response parameter is used by a home domain network element to authenticate the first device, and the first response parameter is generated based on the first key generation algorithm and a second parameter.

32. The method according to claim 30, wherein the response parameter comprises a first response parameter, the first response parameter is used by a home domain network element to authenticate the first device, and the first response parameter is generated based on a second key generation algorithm and the first parameter.

33. The method according to claim 31 or 32, wherein the response parameter comprises a second response parameter, the second response parameter is used by a service domain network element to authenticate the first device, and the second response parameter is generated based on the first response parameter and a third parameter.

34. The method according to any one of claims 31 to 33, wherein the response parameter comprises a third response parameter, the third response parameter is used by an access network device to authenticate the first device, and the third response parameter is generated based on the first response parameter and a fourth parameter.

35. The method according to any one of claims 30 to 34, wherein before the transmitting, by the access network device, the first authentication request to the first device, the method further comprises:
receiving, by the access network device, a second authentication request from the first device, wherein the second authentication request comprises a concealed identifier of the first device, and the concealed identifier is generated by performing an exclusive OR operation on an identifier of the first device and a first key.

36. The method according to any one of claims 30 to 34, wherein before the transmitting, by the access network device, the first authentication request to the first device, the method further comprises:
receiving, by the access network device, a second authentication request from the first device, wherein the second authentication request comprises a concealed identifier of the first device, the concealed identifier is generated based on a concealed identifier of the first device, a first key, and a third key generation algorithm, and the third key generation algorithm is the first key generation algorithm or a second key generation algorithm.

37. The method according to claim 35 or 36, wherein the first key is a physical layer key between the first device and the access network device; and the method further comprises:

determining, by the access network device, the identifier of the first device based on the first key and the concealed identifier; and transmitting, by the access network device, the second authentication request to the authentication network element, wherein the second authentication request comprises one or more of following information: the first key, or the identifier of the first device.

**38.** The method according to claim 35 or 36, wherein the first key is a shared key between the first device and the authentication network element; and the method further comprises:
transmitting, by the access network device, the second authentication request to the authentication network element, wherein the second authentication request comprises the concealed identifier.

**39.** The method according to any one of claims 30 to 38, wherein the first authentication response comprises a third response parameter, and the method further comprises:

> receiving, by the access network device, a second authentication response from the authentication network element, wherein the second authentication response comprises a third expected response; and
> comparing, by the access network device, the third response parameter with the third authentication response to authenticate the first device.

**40.** A device, wherein the device is a first device, and the first device comprises:

> a receiving unit, configured to receive a first authentication request from a proxy node, wherein the first authentication request comprises a first message authentication code, and the first message authentication code is generated by an authentication network element;
> a generation unit, configured to generate a second message authentication code based on a first key generation algorithm and a first parameter;
> an authentication unit, configured to authenticate the authentication network element based on the first message authentication code and the second message authentication code,
> the generation unit, further configured to generate, by the first device, a response parameter in a case in which the authentication network element is successfully authenticated; and
> a transmitting unit, configured to transmit a first authentication response to the proxy node, wherein the first authentication response comprises the response parameter, and the response parameter is used to authenticate the first device.

**41.** The device according to claim 40, wherein the response parameter comprises a first response parameter, and the first response parameter is used by a home domain network element to authenticate the first device; and the generation unit is configured to:
generate the first response parameter based on the first key generation algorithm and a second parameter.

**42.** The device according to claim 40, wherein the response parameter comprises a first response parameter, and the first response parameter is used by a home domain network element to authenticate the first device; and the generation unit is configured to:
generate the first response parameter based on a second key generation algorithm and the first parameter.

**43.** The device according to claim 41 or 42, wherein the response parameter comprises a second response parameter, and the second response parameter is used by a service domain network element to authenticate the first device; and the generation unit is configured to:
generate the second response parameter based on the first response parameter and a third parameter.

**44.** The device according to any one of claims 41 to 43, wherein the response parameter comprises a third response parameter, and the third response parameter is used by an access network device to authenticate the first device; and the generation unit is configured to:
generate the third response parameter based on the first response parameter and a fourth parameter.

**45.** The device according to any one of claims 40 to 44, wherein the generation unit is further configured to perform, before receiving the first authentication request from the proxy node, an exclusive OR operation on an identifier of the first device and a first key to generate a concealed identifier of the first device; and
the transmitting unit is further configured to transmit a second authentication request to the proxy node, wherein the second authentication request comprises the concealed identifier.

**46.** The device according to claim 40, wherein the generation unit is further configured to generate a concealed identifier of the first device based on an identifier of the first device, a first key, and a third key generation algorithm before receiving the first authentication request from the proxy node, wherein the third key generation algorithm is the first key generation algorithm or a second key generation algorithm; and
the transmitting unit is further configured to transmit a second authentication request to the proxy node, wherein the second authentication request comprises the concealed identifier.

47. The device according to claim 45 or 46, wherein the first key is a shared key between the first device and the authentication network element, or the first key is a physical layer key between the first device and the proxy node.

48. The device according to any one of claims 40 to 47, wherein the generation unit is further configured to:

    generate a second key in a case in which the authentication network element is successfully authenticated; and
    generate a key for Authentication and Key Management for Applications based on the second key and a fourth key generation algorithm.

49. The device according to claim 48, wherein

    the transmitting unit is further configured to transmit an application session establishment request message to the proxy node;
    the receiving unit is further configured to receive an application session establishment response message from the proxy node;
    the generation unit is further configured to: generate an application key based on the key for Authentication and Key Management for Applications in response to receiving the application session establishment response message; and generate a third key based on the application key, a first key, and a fifth key generation algorithm, wherein the first key is a physical layer key between the first device and the proxy node, and the fifth key generation algorithm is the first key generation algorithm or a second key generation algorithm; and
    the device further comprises a communications unit, configured to perform secure communication with the proxy node based on the third key.

50. A proxy node, comprising:

    a transmitting unit, configured to transmit a first authentication request to a first device, wherein the first authentication request comprises a first message authentication code, the first message authentication code is generated by an authentication network element, the first message authentication code and a second message authentication code are used to authenticate the authentication network element, the second message authentication code is generated by the first device, and the first message authentication code and the second message authentication code are generated based on a first key generation algorithm and a first parameter; and
    a receiving unit, configured to receive a first authentication response from the first device, wherein the first authentication response comprises a response parameter, the response parameter is used to authenticate the first device, and the response parameter is generated in a case in which the authentication network element is successfully authenticated.

51. The proxy node according to claim 50, wherein the response parameter comprises a first response parameter, the first response parameter is used by a home domain network element to authenticate the first device, and the first response parameter is generated based on the first key generation algorithm and a second parameter.

52. The proxy node according to claim 50, wherein the response parameter comprises a first response parameter, the first response parameter is used by a home domain network element to authenticate the first device, and the first response parameter is generated based on a second key generation algorithm and the first parameter.

53. The proxy node according to claim 51 or 52, wherein the response parameter comprises a second response parameter, the second response parameter is used by a service domain network element to authenticate the first device, and the second response parameter is generated based on the first response parameter and a third parameter.

54. The proxy node according to any one of claims 51 to 53, wherein the response parameter comprises a third response parameter, the third response parameter is used by an access network device to authenticate the first device, and the third response parameter is generated based on the first response parameter and a fourth parameter.

55. The proxy node according to any one of claims 50 to 54, wherein
    the receiving unit is further configured to receive a second authentication request from the first device before transmitting the first authentication request to the first device, wherein the second authentication request comprises a concealed identifier of the first device, and the concealed identifier is generated by performing an exclusive OR operation on an identifier of the first device and a first key.

56. The proxy node according to any one of claims 50 to 54, wherein
    the receiving unit is further configured to receive a second authentication request from the first device before transmitting the first authentication request to the first device, wherein the second authentication request comprises a concealed identifier of the first device, the concealed identifier is generated based on a concealed identifier of the first device, a first key, and a third key generation algorithm, and the third key generation algorithm is the first key generation algorithm or a second key generation algorithm.

57. The proxy node according to claim 55 or 56, wherein the first key is a physical layer key between the first device and the proxy node, and the proxy node further comprises a determining unit, configured to determine the identifier of the first device based on the first key and the concealed identifier; and
the transmitting unit is further configured to transmit the second authentication request to the authentication network element, wherein the second authentication request comprises one or more of following information: the first key, the identifier of the first device, or an identifier of the proxy node.

58. The proxy node according to claim 55 or 56, wherein the first key is a shared key between the first device and the authentication network element; and
the transmitting unit is further configured to transmit the second authentication request to the authentication network element, wherein the second authentication request comprises one or more of following information: the concealed identifier or an identifier of the proxy node.

59. The proxy node according to any one of claims 50 to 58, wherein the receiving unit is further configured to receive an application key from an application function network element; and
the proxy node further comprises:

a generation unit, configured to generate a third key based on the application key, a first key, and a fifth key generation algorithm, wherein the first key is a physical layer key between the first device and the proxy node, and the fifth key generation algorithm is the first key generation algorithm or a second key generation algorithm; and
a communications unit, configured to perform secure communication with the first device based on the third key.

60. An authentication network element, comprising:

a generation unit, configured to generate a first message authentication code and an expected response, wherein the expected response is used to authenticate a first device, and the first message authentication code is generated based on a first key generation algorithm and a first parameter; and
a transmitting unit, configured to transmit a first authentication request to a proxy node, wherein the first authentication request comprises the first message authentication code, the first message authentication code and a second message authentication code are used to authenticate the authentication network element, and the second message authentication code is generated by the first device.

61. The authentication network element according to claim 60, wherein the expected response comprises a first expected response, and the first expected response is used by a home domain network element to authenticate the first device; and the generation unit is configured to:
generate the first expected response based on the first key generation algorithm and a second parameter.

62. The authentication network element according to claim 60, wherein the expected response comprises a first expected response, and the first expected response is used by a home domain network element to authenticate the first device; and the generation unit is configured to:
generate the first expected response based on a second key generation algorithm and the first parameter.

63. The authentication network element according to claim 61 or 62, wherein the expected response comprises a second expected response, and the second expected response is used by a service domain network element to authenticate the first device; and the generation unit is configured to:
generate the second expected response based on the first expected response and a third parameter.

64. The authentication network element according to any one of claims 61 to 63, wherein the expected response comprises a third expected response, and the third expected response is used by an access network device to authenticate the first device; and the generation unit is configured to:
generate the third expected response based on the first expected response and a fourth parameter.

65. The authentication network element according to any one of claims 60 to 64, wherein the authentication network element further comprises:

a receiving unit, configured to receive a second authentication request from the proxy node before the authentication network element generates the first message authentication code and the expected response, wherein the second authentication request comprises a concealed identifier of the first device; and

a determining unit, configured to determine an identifier of the first device based on the concealed identifier and a first key.

66. The authentication network element according to claim 65, wherein the first key is a shared key between the first device and the authentication network element, or the first key is a physical layer key between the first device and the proxy node.

67. The authentication network element according to any one of claims 60 to 66, wherein the generation unit is configured to:

generate a second key in a case in which the first device is successfully authenticated; and generate a key for Authentication and Key Management for Applications based on the second key and a fourth key generation algorithm.

68. The authentication network element according to any one of claims 60 to 67, wherein the first parameter comprises a first random number, and the first random number is selected by the authentication network element, or the first random number is pre-shared between the authentication network element and the first device.

69. An access network device, comprising:

a transmitting unit, configured to transmit a first authentication request to a first device, wherein the first authentication request comprises a first message authentication code, the first message authentication code is generated by an authentication network element, the first message authentication code and a second message authentication code are used to authenticate the authentication network element, the second message authentication code is generated by the first device, and the first message authentication code and the second message authentication code are generated based on a first key generation algorithm and a first parameter; and a receiving unit, configured to receive a first authentication response from the first device, wherein the first authentication response comprises a response parameter, the response parameter is used to authenticate the first device, and the response parameter is generated in a case in which the authentication network element is successfully authenticated.

70. The access network device according to claim 69, wherein the response parameter comprises a first response parameter, the first response parameter is used by a home domain network element to authenticate the first device, and the first response parameter is generated based on the first key generation algorithm and a second parameter.

71. The access network device according to claim 69, wherein the response parameter comprises a first response parameter, the first response parameter is used by a home domain network element to authenticate the first device, and the first response parameter is generated based on a second key generation algorithm and the first parameter.

72. The access network device according to claim 70 or 71, wherein the response parameter comprises a second response parameter, the second response parameter is used by a service domain network element to authenticate the first device, and the second response parameter is generated based on the first response parameter and a third parameter.

73. The access network device according to any one of claims 70 to 72, wherein the response parameter comprises a third response parameter, the third response parameter is used by an access network device to authenticate the first device, and the third response parameter is generated based on the first response parameter and a fourth parameter.

74. The access network device according to any one of claims 69 to 73, wherein the receiving unit is further configured to:
receive a second authentication request from the first device before the access network device transmits the first authentication request to the first device, wherein the second authentication request comprises a concealed identifier of the first device, and the concealed identifier is generated by performing an exclusive OR operation on an identifier of the first device and a first key.

75. The access network device according to any one of claims 69 to 73, wherein the receiving unit is further configured to:
receive a second authentication request from the first device before the access network device transmits the first authentication request to the first device, wherein the second authentication request comprises a concealed identifier of the first device, the concealed identifier is generated based on a concealed identifier of the first device, a first key, and a third key generation algorithm, and the third key generation algorithm is the first key generation algorithm or a second key generation algorithm.

76. The access network device according to claim 74 or 75, wherein the first key is a physical layer key between the first device and the access network device, and the access network device further comprises a determining unit, configured to determine the identifier of the first device based on the first key and the concealed identifier; and

the transmitting unit is further configured to transmit the second authentication request to the authentication network element, wherein the second authentication request comprises one or more of following information: the first key, or the identifier of the first device.

77. The access network device according to claim 74 or 75, wherein the first key is a shared key between the first device and the authentication network element; and the transmitting unit is further configured to:

transmit the second authentication request to the authentication network element, wherein the second authentication request comprises the concealed identifier.

78. The access network device according to any one of claims 69 to 77, wherein the first authentication response comprises a third response parameter, the receiving unit is further configured to receive a second authentication response from the authentication network element, and the second authentication response comprises a third expected response; and

the access network device further comprises a comparison unit, configured to compare the third response parameter with the third authentication response to authenticate the first device.

79. A device, wherein the device is a first device, the first device comprises a memory and processor, the memory is configured to store a program, and the processor is configured to invoke the program in the memory, to cause the first device to execute the method according to any one of claims 1 to 10.

80. A proxy node, comprising a memory and a processor, wherein the memory is configured to store a program, and the processor is configured to invoke the program in the memory to cause the proxy node to execute the method according to any one of claims 11 to 20.

81. An authentication network element, comprising a memory and a processor, wherein the memory is configured to store a program, and the processor is configured to invoke the program in the memory to cause the authentication network element to execute the method according to any one of claims 21 to 29.

82. An access network device, comprising a memory and a processor, wherein the memory is configured to store a program, and the processor is configured to invoke the program in the memory to execute the method according to any one of claims 30 to 39.

83. An apparatus, comprising a processor, configured to invoke a program from a memory to execute the method according to any one of claims 1 to 10.

84. An apparatus, comprising a processor, configured to invoke a program from a memory to execute the method according to any one of claims 11 to 20.

85. An apparatus, comprising a processor, configured to invoke a program from a memory to execute the method according to any one of claims 21 to 29.

86. An apparatus, comprising a processor, configured to invoke a program from a memory to execute the method according to any one of claims 30 to 39.

87. A chip, comprising a processor, configured to invoke a program from a memory to cause a device installed with the chip to execute the method according to any one of claims 1 to 10.

FIG. 1

FIG. 2

UE | AMF | AUSF | UDM | AAnF

Primary authentication

UE authentication acquisition request →

UE authentication acquisition response ←

S302: Generate $K_{AKMA}$ and A-KID based on $K_{AUSF}$

S302: Generate $K_{AKMA}$ and A-KID based on $K_{AUSF}$

S304: AKMA anchor key registration request →

S306: AKMA anchor key registration response ←

FIG. 3

UE | AUSF | AAnF | AF

Prerequisite condition
Primary authentication and generation of $K_{AKMA}$

S402: Application session establishment request →

S404: AKMA application key acquisition request ←

S406: Generate $K_{AF}$ based on $K_{AKMA}$

S408: AKMA application key acquisition response →

S410: Application session establishment response ←

FIG. 4

FIG. 5

FIG. 6

Manner 2

Manner 1

Backscatter

Supply power/Trigger

Supply power/Trigger

Air interface signalling

Air interface data

Backscatter

Air interface signalling

Supply power only

Trigger only

Backscatter

Air interface signalling

Air interface data

Supply power/Trigger

Backscatter

Manner 3

Manner 4

Backscatter ----------▶ Supply power ◁◁◁◁◁◁◁◁ Trigger ──────▶ Air interface signalling/Air interface data ------ ▶

**FIG. 7**

Access network device

Core network

Proxy node

First device

Third-party server

**FIG. 8**

Access network
device

Core network

First device

Proxy node

Third-party server

FIG. 9

| First device | Proxy node | Authentication network element |
|---|---|---|

S1010: Generate a first message authentication code and/or an expected response

S1030: First authentication request

S1020: First authentication request

S1040: Generate a second message authentication code

S1050: Authenticate the authentication network element

S1060: Generate a response parameter

S1070: First authentication response

S1080: First authentication response

FIG. 10

| First device i (i = 1..., ..., n) | Proxy node | Base station | Service domain network element | Authentication network element |
|---|---|---|---|---|

0: Share a key K with the authentication network element

0: Share the key K with the first device

⌐ Share a key N1 with the proxy ⌐ ⌐ Share the key N1 with ⌐ ⌐ Share the key N1 with ⌐
| node and/or the base station ⌐| ⌐ the first device ⌐ | ⌐ the first device ⌐ |

S1102: Authentication request (DIDi)

S1104: Authentication request (DIDi,UE ID,[N1],[IDi])

S1106: Authentication request (DIDi,UE ID,[N1],[IDi],SN name)

S1108: Confirm an authentication type, [select N2], select a random number RAND, calculate MAC, and XRES, and construct an authentication vector AV

S1110: Authentication response (AV,[IDi])

S1112: Store RES2

S1114: Authentication request (AV,[IDi])

S1116: Calculate/Store XRES3

S1118: Authentication request

S1120: Verify the authentication network element, calculate MAC, RES1, RES2, and RES3, and generate a key Ks

S1122: Authentication response RES1, RES2, and RES3

S1124: Compare RES3 with XRES3

S1126: Authentication response RES1 and RES2

S1128: Compare RES2 with XRES2

S1130: Authentication request RES1

S1132: Compare RES1 with XRES1, and generate a key Ks

S1134: Response message ([Ks])

FIG. 11

| First device i | Proxy node | Access network or service network | Authentication network element | AAnF/KMS |
|---|---|---|---|---|

1. Lightweight initial authentication

⌐ S1202: Generate ⌐
| Ks, A-KID, and |
| an AKMA key |

⌐ S1202: Generate ⌐
| Ks, A-KID, and |
| an AKMA key |

S1204: Registration request (IDi, A-KID, $K_{AKMA}$)

FIG. 12

| First device i | Proxy node and/ or base station | AF | AAnF/KMS |
|---|---|---|---|

0. Share a key N1 ┆ 0. Share the key N1 ┐

S1302: Application session establishment request (A-KID)

S1304: Application key request (A-KID)

S1306: Generate an application key

S1308: Application key response

S1310: Application key response

S1312: Generate Ku1

S1314: Application session establishment response

┌ S1316: Generate an application key and Ku1 ┐

S1318: Response message

**FIG. 13**

| First device | Access network device | Authentication network element |
|---|---|---|

S1410: Generate a first message authentication code and/or an expected response

S1430: First authentication request

S1420: First authentication request

S1440: Generate a second message authentication code

S1450: Authenticate the authentication network element

S1460: Generate a response parameter

S1470: First authentication response

S1480: First authentication response

**FIG. 14**

| First device I (I = 1..., ..., n) | Base station | Service domain network element | Authentication network element |
|---|---|---|---|

0: Share a key K with the authentication network element

0: Share the key K with the first device

Share a key N1 with the base station

Share the key N1 with the first device

S1502: Authentication request (DIDi)

S1504: Authentication request (DIDi,[N1],[IDi])

S1506: Authentication request (DIDi,[N1],[IDi],SN name)

S1508: Confirm an authentication type, [select N2], select a random number RAND, calculate MAC, and XRES, and construct an authentication vector AV

S1510: Authentication response (AV,[IDi])

S1512: Store RES2

S1514: Authentication request (AV,[IDi])

S1516: Calculate/Store XRES3

S1518: Authentication request

S1520: Verify the authentication network element, calculate MAC, RES1, RES2, and RES3, and generate a key Ks

S1522: Authentication response RES1, RES2, and RES3

S1524: Compare RES3 with XRES3

S1526: Authentication response RES1 and RES2

S1528: Compare RES2 with XRES2

S1530: Authentication request RES1

S1532: Compare RES1 with XRES1, and generate a key Ks

S1534: Response message

FIG. 15

First
device i

AF

AAnF/KMS

S1602: Application session
establishment request (A-KID)

S1604: Application key request
(A-KID)

S1606: Generate an
application key

S1608: Application key
response

S1608: Application session
establishment response

FIG. 16

First device

Proxy node

Application function
network element

Authentication
network element

S1710: Authentication request

S1720: Authorization
check

S1730: Authentication
request

FIG. 17

| First device i | Proxy node and/ or base station | AF | NEF | Authentication network element | AAnF |
|---|---|---|---|---|---|

| 0. Share a root key K | | 0. Share the root key K | | | |

S1802:
—Authentication→
request (DIDi)

S1804:
Authentication
request (DIDi,UE
ID)

S1806: [De-anonymization], perform an authorization check, perform whitelist management, and caulcate Kb

S1808: Authentication request
(provide K, IDi, UE ID, and AF ID)

S1810: Perform mutual authentication between the first device and the network side

Authenticate the network side, and generate Ks, A-KID, and an AKMA key

Generate Ks, A-KID, and an AKMA key

S1812: Provide a key material

S1814: Generate an application key

S1814: Generate an application key

S1816: Response message

S1820: Generate a key Ku1

S1818: Generate a key Ku1

FIG. 18

| First device | Application function network element | Authentication network element |
|---|---|---|

S1910: Authentication request

S1920: Authorization check

S1930: Authentication request

FIG. 19

First device i | AF | NEF | Authentication network element | AAnF

0. Share a root key K

0. Pre-share the root key K

S2002: Authentication request (DIDi)

S2004: [De-anonymization], perform an authorization check, perform whitelist management, and caulcate Kb

S2006: Authentication request (provide K, IDi, and AF ID)

S2008: Perform mutual authentication between the first device and the network side

Authenticate the network side, and generate Ks, A-KID, and an AKMA key

Generate Ks, A-KID, and an AKMA key

S2010: Provide a key material

S2012: Generate an application key

S2012: Generate an application key

S2014: Response message

S2016: Response message

FIG. 20

First device 2100

Receiving unit 2110

Generation unit 2120

Authentication unit 2130

Transmitting unit 2140

FIG. 21

Proxy node 2200

Transmitting unit
2210

Receiving unit
2220

FIG. 22

Authentication network
element 2300

Generation unit
2310

Transmitting unit
2320

FIG. 23

Access network device 2400

Transmitting unit
2410

Receiving unit
2420

FIG. 24

Apparatus
2500

Processor
2510

Memory
2520

Transceiver
2530

FIG. 25

## INTERNATIONAL SEARCH REPORT

| International application No. |
| --- |
| **PCT/CN2023/095769** |

### A. CLASSIFICATION OF SUBJECT MATTER

H04W 12/069(2021.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS: CNTXT; VEN; WOTXT; USTXT; EPTXT; CNKI; 3GPP: 终端, 零功耗, 物联网设备, 代理, 认证, 请求, 消息认证码, 密钥, 算法, 成功, 响应, 基站, 接入网, terminal, UE, IoT, proxy, authenticate, request, MAC, key, success, response, XRES

### C. DOCUMENTS CONSIDERED TO BE RELEVANT

| Category* | Citation of document, with indication, where appropriate, of the relevant passages | Relevant to claim No. |
| --- | --- | --- |
| X | CN 110012467 A (BEELINKER TECHNOLOGY (SUZHOU) CO., LTD.) 12 July 2019 (2019-07-12) description, paragraphs [0015]-[0030] | 1-87 |
| A | CN 111669276 A (HUAWEI TECHNOLOGIES CO., LTD.) 15 September 2020 (2020-09-15) entire document | 1-87 |
| A | CN 115380570 A (HUAWEI TECHNOLOGIES CO., LTD.) 22 November 2022 (2022-11-22) entire document | 1-87 |
| A | CN 115776398 A (CHINA RESOURCES DIGITAL TECHNOLOGY CO., LTD.) 10 March 2023 (2023-03-10) entire document | 1-87 |
| A | US 2017353859 A1 (SEARS BRANDS, L.L.C.) 07 December 2017 (2017-12-07) entire document | 1-87 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 January 2024** | **04 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/095769**

| Patent document cited in search report | | | Publication date (day/month/year) | Patent family member(s) | | | Publication date (day/month/year) |
|---|---|---|---|---|---|---|---|
| CN | 110012467 | A | 12 July 2019 | None | | | |
| CN | 111669276 | A | 15 September 2020 | None | | | |
| CN | 115380570 | A | 22 November 2022 | None | | | |
| CN | 115776398 | A | 10 March 2023 | None | | | |
| US | 2017353859 | A1 | 07 December 2017 | US | 10064062 | B2 | 28 August 2018 |

Form PCT/ISA/210 (patent family annex) (July 2022)